(19) Europäisches Patentamt / European Patent Office / Office européen des brevets

(11) **EP 4 761 388 A1**

(12) **EUROPEAN PATENT APPLICATION**
published in accordance with Art. 153(4) EPC

(43) Date of publication:
**17.06.2026 Bulletin 2026/25**

(21) Application number: **24851075.2**

(22) Date of filing: **08.08.2024**

(51) International Patent Classification (IPC):
*H04W 52/36* (2009.01)

(52) Cooperative Patent Classification (CPC):
**H04W 8/24; H04W 52/36**

(86) International application number:
**PCT/CN2024/110546**

(87) International publication number:
**WO 2025/031430 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023 CN 202311009637**

(71) Applicant: **Vivo Mobile Communication Co., Ltd.
Dongguan, Guangdong 523863 (CN)**

(72) Inventors:
• **CAO, Jiayi
Dongguan, Guangdong 523863 (CN)**
• **DU, Hao
Dongguan, Guangdong 523863 (CN)**

(74) Representative: **dompatent
Partnerschaft von
Patentanwälten und Rechtsanwälten mbB
Deichmannhaus am Dom
Bahnhofsvorplatz 1
50667 Köln (DE)**

(54) **OUTPUT POWER CONTROL METHOD AND APPARATUS, TERMINAL, AND NETWORK SIDE DEVICE**

(57) The present application relates to the technical field of communications, and discloses an output power control method and apparatus, a terminal, and a network side device. The output power control method in embodiments of the present application comprises: a terminal increases the upper limit value of the maximum output power of the terminal on the basis of a target power adjustment value, wherein the lower limit value of the maximum output power of the terminal remains unchanged, or the target power adjustment value is related to RB allocation of the terminal.

A terminal boosts an upper limit value of maximum output power of the terminal based on a target power adjustment value, where a lower limit value of the maximum output power of the terminal remains unchanged, or the target power adjustment value is related to an RB allocation of the terminal ⌐ 201

FIG. 2

EP 4 761 388 A1

**Description**

CROSS-REFERENCE TO RELATED APPLICATIONS

This application claims priority to Chinese Patent Application No. 202311009637.2 filed in China on August 10, 2023, which is incorporated herein by reference in its entirety.

TECHNICAL FIELD

This application belongs to the field of communication technologies, and specifically, relates to an output power control method and apparatus, a terminal, and a network-side device.

BACKGROUND

Maximum power back-off (namely, maximum power reduction (Maximum Power Reduction, MPR)) refers to maximum allowable reduction in output power of a terminal. A reference value of the maximum power reduction is maximum output power corresponding to an associated power class (Power Class). Therefore, a value of MPR needs to always be positive. Because a peak to average power ratio (Peak to Average Power Ratio, PAPR) can be effectively reduced through a technique such as frequency domain shaping or peak clipping, gains in transmission performance can be achieved, and the output power of the terminal is boosted. Under particular conditions, the existing upper limit value of the power class may be exceeded, which causes the value of MPR to become negative.

In the related transmission power configuration method, an upper limit value and a lower limit value of the maximum output power of the terminal operating in a specific power class are usually boosted simultaneously by $\Delta P_{PowerClass}$. $\Delta P_{PowerClass}$ denotes an adjustment value of the maximum output power corresponding to the power class under particular conditions, and a value is 0 dB, 3 dB or 6 dB. However, this maximum output power boosting method has relatively poor flexibility.

SUMMARY

Embodiments of this application provide an output power control method and apparatus, a terminal, and a network-side device, to simplify an implementation of boosting maximum output power or improve flexibility in boosting the maximum output power.

In a first aspect, an output power control method is provided. The method includes:

A terminal boosts an upper limit value of maximum output power of the terminal based on a target power adjustment value, where

a lower limit value of the maximum output power of the terminal remains unchanged, or the target power adjustment value is related to a resource block (Resource Block, RB) allocation of the terminal.

In a second aspect, an output power control method is provided. The method includes:

A network-side device sends indication information to a terminal based on a resource block RB allocation of the terminal, where the indication information indicates the terminal to boost maximum output power of the terminal.

In a third aspect, an output power control apparatus is provided. The apparatus includes:

a boosting module, configured to boost an upper limit value of maximum output power of a terminal based on a target power adjustment value, where

a lower limit value of the maximum output power of the terminal remains unchanged, or the target power adjustment value is related to a resource block RB allocation of the terminal.

In a fourth aspect, an output power control apparatus is provided. The apparatus includes:

a sending module, configured to send indication information to a terminal based on a resource block RB allocation of the terminal, where the indication information indicates the terminal to boost maximum output power of the terminal.

In a fifth aspect, a terminal is provided. The terminal includes a processor and a memory. The memory stores a program or instructions runnable on the processor, and the program or instructions are executed by the processor to implement the steps of the method in the first aspect.

In a sixth aspect, a terminal is provided, including a processor and a communication interface, where the processor is configured to boost an upper limit value of maximum output power of the terminal based on a target power adjustment value, where a lower limit value of the maximum output power of the terminal remains unchanged, or the target power adjustment value is related to a resource block RB allocation of the terminal.

In a seventh aspect, a network-side device is provided. The network-side device includes a processor and a memory. The memory stores a program or instructions runnable on the processor, and the program or instructions are executed by the processor to implement the steps of the method in the second aspect.

In an eighth aspect, a network-side device is provided, including a processor and a communication interface, where the communication interface is configured to send indication information to a terminal based on a resource block RB allocation of the terminal, where the indication information indicates the terminal to boost maximum output power of the terminal.

In a ninth aspect, an output power control system is provided, including: a terminal and a network-side device. The terminal may be configured to perform the steps of the output power control method in the first aspect, and the network-side device may be configured to perform the steps of the output power control method in the second aspect.

In a tenth aspect, a readable storage medium is provided. The readable storage medium stores a program or instructions, and the program or instructions are executed by a processor to implement the steps of the method in the first aspect or implement the steps of the method in the second aspect.

In an eleventh aspect, a chip is provided. The chip includes a processor and a communication interface. The communication interface is coupled to the processor, and the processor is configured to run a program or instructions to implement the steps of the method in the first aspect, or implement the steps of the method in the second aspect.

In a twelfth aspect, a computer program/program product is provided. The computer program/program product is stored in a storage medium. The computer program/program product is executed by at least one processor to implement the steps of the method in the first aspect, or implement the steps of the method in the second aspect.

In embodiments of this application, the terminal boosts the upper limit value of the maximum output power of the terminal based on the target power adjustment value, where the lower limit value of the maximum output power of the terminal remains unchanged. That is, in embodiments of this application, the terminal only boosts the upper limit value of the maximum output power of the terminal based on the target power adjustment value. In this way, power class boosting caused by the boosting of the maximum output power can be reduced. This not only can simplify the implementation of boosting the maximum output power and improve flexibility in boosting the maximum output power of the terminal, but can also reduce limitations to output power of the terminal and improve a degree of freedom of implementation of the terminal. Alternatively, in embodiments of this application, the terminal boosts the upper limit value of the maximum output power of the terminal based on the target power adjustment value. In addition, the target power adjustment value is related to the RB allocation of the terminal. In this way, it is beneficial to boosting the upper limit value of the maximum output power of the terminal to different extents for different RB allocations and improving the flexibility in boosting the maximum output power.

## BRIEF DESCRIPTION OF THE DRAWINGS

FIG. 1 is a block diagram of a wireless communication system to which an embodiment of this application is applicable.
FIG. 2 is a flowchart of an output power control method according to an embodiment of this application.
FIG. 3 is a flowchart of an output power control method according to an embodiment of this application.
FIG. 4 is a diagram of a structure of an output power control apparatus according to an embodiment of this application.
FIG. 5 is a diagram of a structure of another output power control apparatus according to an embodiment of this application.
FIG. 6 is a diagram of a structure of a communication device according to an embodiment of this application.
FIG. 7 is a diagram of a structure of a terminal according to an embodiment of this application.
FIG. 8 is a diagram of a structure of a network-side device according to an embodiment of this application.

## DETAILED DESCRIPTION

The following clearly describes the technical solutions in embodiments of this application with reference to the accompanying drawings in embodiments of this application. Apparently, the described embodiments are some embodiments of this application rather than all embodiments. All other embodiments obtained by a person of ordinary skill in the art based on embodiments of this application fall within the scope of protection of this application.

In this application, the terms "first", "second", and the like are used to distinguish similar objects, but are not used to describe a specific sequence or order. It should be understood that the terms used in this way may be transposed where appropriate, so that embodiments of this application may be implemented in a sequence other than those illustrated or described herein. In addition, objects defined by "first" and "second" are generally of the same class and do not limit a quantity of objects. For example, one or more first objects may be arranged. In addition, in this application, "or" indicates at least one of connected objects. For example, "A or B" covers three solutions, that is, a solution I: including A and excluding B; a solution II: including B and excluding A; and a solution III: including both A and B. The character "/" generally indicates an "or" relationship between the associated objects.

In this application, the term "indication" may be a direct indication (or referred to as an explicit indication), or may be an indirect indication (or referred to as an implicit indication). The direct indication may be understood as that a sender clearly informs a receiver of content such as specific information, required operations, or requested results in a sent indication; and the indirect indication may be understood as that the receiver determines corresponding information according to an indication sent by the sender, or performs judgment and determines required operations, requested results, or the like according to a judgment result.

It is to be noted that, the technology described in embodiments of this application may be applied to a long term evolution (Long Term Evolution, LTE)/LTE-advanced (LTE-Advanced, LTE-A) system, and may be further applied to another wireless communication system such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA) system, or another system. In embodiments of this application, the terms "system" and "network" are usually interchangeably used, and the described technology may be applied to both the system and the wireless technology mentioned above, or may be applied to another system and wireless technology. A new radio (New Radio, NR) system is described below as an example, and the term NR is used in most of the following description. Nevertheless, the technologies may be applied to a system other than the NR system, such as a 6th generation (6th generation, 6G) communication system.

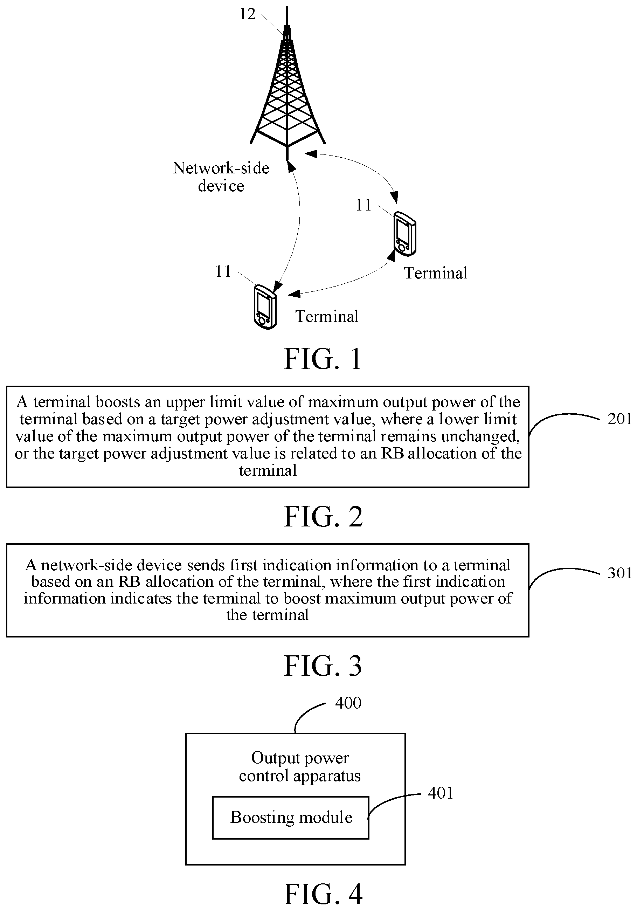

FIG. 1 is a block diagram of a wireless communication system to which an embodiment of this application is applicable. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), a flight vehicle, vehicle user equipment (Vehicle User Equipment, VUE), ship user equipment, pedestrian user equipment (Pedestrian User Equipment, PUE), a smart home appliance (a home device with a wireless communication function, such as a refrigerator, a television, a washing machine, or furniture), a game console, a personal computer (Personal Computer, PC), a teller machine, or a self-service machine. The wearable device includes: a smart watch, a smart bracelet, a smart headset, smart glasses, smart jewelry (a smart bracelet, a smart chain bracelet, a smart ring, a smart necklace, a smart ankle bangle, a smart ankle chain, and the like), a smart wristband, smart clothing, and the like. The vehicle user equipment may alternatively be referred to as an in-vehicle terminal, an in-vehicle controller, an in-vehicle module, an in-vehicle component, an in-vehicle chip, an in-vehicle unit, or the like. It should be noted that a specific type of the terminal 11 is not limited in embodiments of this application. The network-side device 12 may include an access network device or a core network device. The access network device may alternatively be referred to as a radio access network (Radio Access Network, RAN) device, a wireless access network function, or a wireless access network unit. The access network device may include a base station, a wireless local area network (Wireless Local Area Network, WLAN) access point (Access Point, AP), a wireless fidelity (Wireless Fidelity, WiFi) node, or the like. The base station may be referred to as a node B (Node B, NB), an evolved mode B (Evolved Node B, eNB), the next generation node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP) or another suitable term in the field as long as the same technical effect is achieved, and the base station is not limited to a particular technical word. It should be noted that in embodiments of this application, introduction is made only taking the base station in the NR system as an example, and a specific type of the base station is not limited.

The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in embodiments of this application, introduction is made only taking the core network device in the NR system as an example, and a specific type of the core network device is not limited.

For ease of understanding, some contents involved in embodiments of this application are described below.

I. Frequency domain spectral shaping (Frequency Domain Spectral Shaping, FDSS) technique:

After a set of discrete time-domain signals passes through a digital to analog converter (Digital to Analog Converter, DAC) module, a peak-to-average ratio of an analog signal output by the DAC module has a particular relationship with a correlation between the set of discrete time-domain data. It is assumed that a set of discrete time-domain data signals $y(n)$ are convolved in time domain with a set of discrete time-domain data $d(n)$, to obtain $yd(n)$:

$$y(n) \otimes d(n) = yd(n)$$

It is assumed that after $y(n)$ and $yd(n)$ passes through the DAC, peak-to-average power ratios of output signals are respectively PAPR1 and PAPR2. If $d(n)$ is a set of designed weighting coefficients, a correlation between neighboring data of $yd(n)$ is higher than a correlation between neighboring data of $y(n)$. A higher correlation indicates a smaller peak-to-average power ratio (Peak to Average Power Ratio, PAPR). Therefore, PAPR2 is smaller than PAPR1. Convolving a set of discrete time-domain data with a set of designed discrete data can effectively reduce the PAPR.

According to the convolution theorem, a convolution operation of two time-domain signals may be equivalent to a point-wise multiplication of corresponding frequency-domain representations of the two time-domain signals in frequency domain. Therefore, a set of discrete time-domain data is transformed into discrete frequency-domain data by DFT, multiplied point-wise by a designed spectral shaping sequence, and then transformed back into a time-domain signal by IDFT, so that PAPR can be effectively reduced. Because the point-wise multiplication has lower complexity than a convolution operation, such a PAPR reduction technique can be efficiently performed in frequency domain. Therefore, such a technique is referred to as frequency domain spectral shaping.

II. Region division of MPR resource block allocation

A power class 3 (power class3) is used as an example, and the following parameters are defined to specify valid ranges of three different divided resource block (Resource Block, RB) regions, namely, an outer region, an inner region, and an edge region, in the MPR specification:

$$RB_{\text{start, low}} = \max(1, \text{floor}(L_{\text{CRB}}/2));$$

and

$$RB_{\text{start, high}} = N_{\text{RB}} - RB_{\text{Start, Low}} - L_{\text{CRB}},$$

where

$L_{\text{CRB}}$ denotes a quantity of allocated consecutive RBs in units of RBs; $N_{\text{RB}}$ denotes a maximum quantity of RBs in a transmission channel bandwidth configuration and a sub-carrier spacing configuration adopted by the terminal; max() denotes a maximum value in all parameters, and floor(x) denotes a maximum integer smaller than or equal to x.

(1) If the RB allocation satisfies the following conditions, the allocation belongs to an inner RB allocation (inner RB allocation) or the inner region:

$$RB_{\text{start, low}} \leq RB_{\text{start}} \leq RB_{\text{start, high}} \text{ and } L_{\text{CRB}} \leq \text{ceil}(N_{\text{RB}}/2),$$

where

$RB_{\text{start}}$ denotes an RB start position or a lowest RB index of the RB allocation; and ceil(x) is a smallest integer greater than or equal to x.
(2) If the RB allocation satisfies the following conditions, the RB allocation belongs to an edge RB allocation (edge RB allocation) or the edge region:
$L_{\text{CRB}} \leq 2$, and an RB position is at an uppermost end or a lowermost end of a channel.
(3) An RB of another type belongs to an outer RB allocation (outer RB allocation) or the outer region.

Specifically, MPR at the power class 3 may be shown in Table 1.

Table 1 MPR at power class 3

| Modulation | | Edge RB allocation | Outer RB allocation | Inner RB allocation |
|---|---|---|---|---|
| DFT-s-OFDM | Pi/2 BPSK | $\leq 3.5^1$ | $\leq 1.2^1$ | $\leq 0.2^1$ |
| | | $\leq 0.5^2$ | $\leq 0.5^2$ | $0^2$ |
| | Pi/2 BPSK with Pi/2 BPSK DMRS (Pi/2 BPSK w Pi/2 BPSK DMRS) | $\leq 0.5^2$ | $0^2$ | $0^2$ |
| | QPSK | $\leq 1$ | | $0$ |
| | 16 QAM | $\leq 2$ | | $\leq 1$ |
| | 64 QAM | $\leq 2.5$ | | |
| | 256 QAM | $\leq 4.5$ | | |
| CP-OFDM | QPSK | $\leq 3$ | | $\leq 1.5$ |
| | 16 QAM | $\leq 3$ | | $\leq 2$ |
| | 64 QAM | $\leq 3.5$ | | |
| | 256 QAM | $\leq 6.5$ | | |

It should be noted that Table 1 above is applicable to UE in a time division duplex (Time Division Duplex, TDD) mode, when the UE adopts a Pi/2 BPSK modulation manner and supports a powerboost-pi2bpsk capability, and powerBoostPi2BPSK is set to 1, n40, n41, n77, n78, and n79 frequency bands are scheduled for uplink (UL) transmission in 40% or less of slots in a radio frame to perform uplink (UL) transmission. A reference power of 0 dB MPR is 26 dBm.

It should be further noted that Table 1 above is applicable to UE that operates in a frequency division duplexing (Frequency Division Duplexing, FDD) mode, or uses a frequency band other than n40, n41, n77, n78, and n79 in the TDD mode, and has Pi/2 BPSK modulation, IE powerBoostPi2BPSK is set to 0, and more than 40% of slots in a radio frame are used for UL transmission in the n40, n41, n77, n78, and n79 frequency bands.

III. Maximum output power boosting mechanism in the related technology

$P_{EMAX, c}$ denotes an allowed maximum output power value of a terminal configured by a network side, $P_{PowerClass}$ denotes a maximum output power of UE specified by a corresponding power class, $\Delta P_{PowerClass}$ denotes a change value of maximum output power corresponding to a power class under a specific condition, and a value of $\Delta P_{PowerClass}$ is usually 0 dB, 3 dB, 6 dB, or the like. $MPR_c$ denotes a maximum power reduction value. $\Delta MPR_c$ denotes a relaxation value of an allowed maximum power reduction. $A\text{-}MPR_c$ denotes a maximum power reduction value for meeting an additional requirement. $P\text{-}MPR_c$ denotes a power reduction value for satisfying an electromagnetic radiation requirement using a distance sensor. $\Delta T_{C, c}$ is an allowed transmission power relaxation value at an operating band edge. $\Delta T_{IB, c}$ denotes an allowed relaxation value of a maximum configured output power due to an operation such as inter-band carrier aggregation (Carrier Aggregation, CA). $\Delta T_{RxSRS}$ is an allowed relaxation value for transmissions on non-primary transmit (Tx) antennas due to sounding reference signal (SRS) antenna switching.

Specifically, the maximum output power $P_{CMAX, f, c}$ on the terminal side satisfies the following formula, $P_{CMAX\_H, f, c}$ and $P_{CMAX\_L, f, c}$ respectively denote an upper limit value and a lower limit value of $P_{CMAX, f, c}$, where

$$P_{CMAX\_L, f, c} \leq P_{CMAX, f, c} \leq P_{CMAX\_H, f, c}$$

$$P_{CMAX\_L, f, c} = MIN\{P_{EMAX, c} - \Delta T_{C, c}, (P_{PowerClass} - \Delta P_{PowerClass}) - MAX(MAX(MPR_c + \Delta MPR_c, A\text{-}MPR_c) + \Delta T_{IB, c} + \Delta T_{C, c} + \Delta T_{RxSRS}, P\text{-}MPR_c)\};$$

and

$$P_{CMAX\_H, f, c} = MIN\{P_{EMAX, c}, P_{PowerClass} - \Delta P_{PowerClass}\}.$$

6

When the terminal supports a powerBoosting-pi2BPSK (powerBoosting-pi2BPSK) capability and an information element (Information Element, IE) powerBoostPi2BPSK is set to 1, for the terminal which operates at the power class 3 and uses PI/2 BPSK modulation in TDD bands n40, n41, n77, n78, and n79, $P_{EMAX, c}$ is increased by 3 dB, and $\Delta P_{PowerClass}$=-3 dB. In this case, the upper limit $P_{CMAX\_H, f, c}$ and the lower limit $P_{CMAX\_L, f, c}$ are boosted correspondingly, and the maximum output power $P_{CMAX, f, c}$ is also boosted correspondingly.

Meanwhile, the reference power of 0 dB MPR is also boosted with the change of $\Delta P_{PowerClass}$, and is changed from original 23 dBm for the power class 3 to 26 dBm. Base on this, values of MPRs in different resource block allocation regions are also increased correspondingly.

An output power control method provided in embodiments of this application is described in detail below through some embodiments and application scenarios of embodiments with reference to the accompanying drawings.

Refer to FIG. 2. FIG. 2 is a flowchart of an output power control method according to an embodiment of this application. The method is performed by a terminal. As shown in FIG. 2, the method includes the following steps:
Step 201: The terminal boosts an upper limit value of maximum output power of the terminal based on a target power adjustment value.

A lower limit value of the maximum output power of the terminal remains unchanged, or the target power adjustment value is related to an RB allocation of the terminal.

In this embodiment, the foregoing target power adjustment value may alternatively be referred to as a target power boosting (Power Boosting) value, and may be denoted as $\Delta P_{PowerBoost}$. For example, the foregoing target power adjustment value may be determined by the terminal based on the RB allocation of the terminal, or may be indicated by a network-side device. For example, the network-side device may determine the target power adjustment value based on the RB allocation of the terminal and indicate the target power adjustment value to the terminal.

The foregoing RB allocation (namely, RB allocation) of the terminal indicates an RB resource allocated by the network-side device to the terminal.

The foregoing upper limit value of the maximum output power of the terminal is denoted as $P_{CMAX\_H, f, c}$, where the maximum output power (namely, $P_{CMAX, f, c}$) on a terminal side needs to be smaller than or equal to the upper limit value of the maximum output power.

In an implementation, the terminal boosts the upper limit value of the maximum output power of the terminal based on the target power adjustment value, and keeps the lower limit value of the maximum output power of the terminal unchanged. That is, the terminal boosts only the upper limit value of the maximum output power of the terminal based on the target power adjustment value. In this way, power class boosting caused by the boosting of the maximum output power can be reduced. This not only can simplify the implementation of boosting the maximum output power, but also can reduce limitations to output power of the terminal and improve a degree of freedom of implementation of the terminal.

It should be noted that in this implementation, the foregoing target power adjustment value may be a value specified in a protocol, a value indicated by the network-side device, a value determined based on the RB allocation of the terminal, or the like. This is not limited in this implementation.

In another implementation, the terminal boosts the upper limit value of the maximum output power of the terminal based on the target power adjustment value, and the target power adjustment value is related to the RB allocation of the terminal. For example, the foregoing target power adjustment value is a power adjustment value determined based on the RB allocation of the terminal, and different RB allocations may correspond to different power adjustment values. In this way, it is beneficial to boosting the upper limit value of the maximum output power of the terminal to different extents for different RB allocations and improving the flexibility in boosting the maximum output power.

It should be noted that in this implementation, the terminal may boost the lower limit value of the maximum output power of the terminal based on the target power adjustment value, or may keep the lower limit value of the maximum output power of the terminal unchanged. This is not limited in this embodiment.

In still another implementation, the terminal boosts the upper limit value of the maximum output power of the terminal based on the target power adjustment value, and keeps the lower limit value of the maximum output power of the terminal unchanged. In addition, the target power adjustment value is related to the RB allocation of the terminal. This not only can simplify the implementation of boosting the maximum output power, but also can reduce limitations to output power of the terminal and improve a degree of freedom of implementation of the terminal. In this way, it is beneficial to boosting the upper limit value of the maximum output power of the terminal to different extents for different RB allocations and improving the flexibility in boosting the maximum output power.

Optionally, before the terminal boosts the upper limit value of the maximum output power of the terminal based on the target power adjustment value, the method further includes:

The terminal reports capability information of the terminal to a network-side device, where the capability information indicates that the terminal has a power boosting capability; and
the terminal receives indication information from the network-side device, where the indication information indicates the terminal to boost the maximum output power of the terminal.

For example, in a case that the terminal has the power boosting (powerBoosting) capability, the terminal may report the capability information of the terminal to the network-side device, to indicate that the terminal has the power boosting capability. For example, the foregoing power boosting capability may be a powerBoosting-r18 capability. In a case that the network-side device receives the capability information of the terminal that is reported by the terminal and in a case that it is determined that a particular condition (for example, a modulation manner of the terminal is a particular modulation manner, a modulation waveform of the terminal is a particular waveform, or the RB allocation of the terminal is an RB allocation of a particular type) is satisfied, the network-side device may send the indication information to the terminal. The indication information indicates the terminal to boost the maximum output power of the terminal, or the indication information indicates the terminal to boost the upper limit value of the maximum output power of the terminal. The foregoing indication information may alternatively be referred to as a power boost indication (powerBoostIndication). In a case that the terminal receives the indication information, the terminal may boost the upper limit value of the maximum output power of the terminal based on the target power adjustment value.

The foregoing indication information may include only an indication for indicating the terminal to boost the upper limit value of the maximum output power of the terminal, or the indication information may include an indication for indicating the terminal to boost the upper limit value of the maximum output power of the terminal and the target power adjustment value.

Optionally, the method further includes:
The terminal determines the target power adjustment value based on the RB allocation of the terminal.

For example, the target power adjustment value may be calculated based on a related parameter (such as a lowest RB index, and a length of consecutive resource blocks in units of RBs) of the RB allocation of the terminal. Alternatively, a correspondence between different types of RB allocations and power adjustment values may be pre-established, and the terminal determines a type of the RB allocation of the terminal, and further, uses a power adjustment value corresponding to the type of the RB allocation of the terminal as the target power adjustment value.

In this embodiment, the terminal determines the target power adjustment value based on the RB allocation of the terminal, which is beneficial to not only boosting the upper limit value of the maximum output power of the terminal to different extents for different RB allocations and improving the flexibility in boosting the maximum output power, but also improving a degree of freedom of the terminal during implementation of boosting the maximum output power.

Optionally, the target power adjustment value is a power adjustment value corresponding to the RB allocation of the terminal, where different types of RB allocations correspond to different power adjustment values.

In this embodiment, different power adjustment values are set for different types of RB allocations. In this way, the type of the RB allocation of the terminal may be determined, and a power adjustment value corresponding to the type of the RB allocation is used as the power adjustment value corresponding to the RB allocation of the terminal.

It may be understood that in this embodiment, different power adjustment values are set based on a granularity of an RB allocation type. In this way, it is beneficial to boosting the upper limit value of the maximum output power of the terminal to different extents for different types of RB allocations and improving the flexibility in boosting the maximum output power.

It should be noted that in this embodiment of this application, the type of the RB allocation may alternatively be referred to as a region of the RB allocation.

Optionally, that the terminal boosts the upper limit value of the maximum output power of the terminal based on the target power adjustment value includes:
In a case that a first condition is satisfied and the RB allocation of the terminal is an RB allocation of a particular type, the terminal boosts the upper limit value of the maximum output power of the terminal based on the target power adjustment value, where

the first condition includes at least one of the following: a modulation waveform of the terminal is a particular waveform, and a modulation manner of the terminal is a particular modulation manner.

Optionally, the particular waveform includes one of the following: discrete Fourier transform-spread-orthogonal frequency division multiplexing (Discrete Fourier Transform-Spread-Orthogonal Frequency Division Multiplexing, DFT-s-OFDM) and cyclic prefix-orthogonal frequency division multiplexing (Cyclic Prefix-Orthogonal Frequency Division Multiplexing, CP-OFDM); or
the particular modulation manner includes one of the following: quadrature phase-shift keying (Quadrature Phase-Shift Keying, QPSK) and quadrature amplitude modulation (Quadrature Amplitude Modulation, QAM).

For example, the foregoing RB allocation of the particular type may be an RB allocation corresponding to a power adjustment value greater than 0.

This embodiment is described below by using an example.

In a case that the modulation waveform and the modulation manner of the terminal are DFT-s-OFDM QPSK and in a case that the terminal has the powerBoosting-r18 capability, the terminal reports the powerBoosting-r18 capability to the network-side device. In a case that the network-side device receives the powerBoosting-r18 capability reported by the terminal, the network-side device allocates an RB to the terminal, and determines the type of the RB allocation of the terminal. In a case that the power adjustment value corresponding to the type of the RB allocation of the terminal is equal to

0 (namely, $\Delta P_{PowerBoost}=0$), the network-side device does not deliver the indication indicating the terminal to boost the maximum output power of the terminal. In this case, the upper limit value of the maximum output power of the terminal remains unchanged. For example, $P_{CMAX\_H,f,c}=MIN\{P_{EMAX,c}, P_{PowerClass}-\Delta P_{PowerClass}\}$ may be remained. In a case that the power adjustment value corresponding to the type of the RB allocation of the terminal is greater than 0 (namely, $\Delta P_{PowerBoost}>0$), the network-side device sends powerBoostIndication to the terminal, to indicate the terminal to boost the maximum output power of the terminal. In this case, the terminal may boost the upper limit value of the maximum output power of the terminal based on the target power adjustment value.

In this embodiment, in a case that the first condition is satisfied and the RB allocation of the terminal is the RB allocation of the particular type, the terminal boosts the upper limit value of the maximum output power of the terminal based on the target power adjustment value. In this way, unnecessary boosting of the upper limit value of the maximum output power in some cases may be reduced.

Optionally, the RB allocation of the particular type is an RB allocation corresponding to a power adjustment value greater than 0.

For example, in a case that the power adjustment value corresponding to the RB allocation of the terminal is greater than 0, the terminal may boost the upper limit value of the maximum output power of the terminal based on the power adjustment value (namely, the target power adjustment value) corresponding to the RB allocation of the terminal.

Optionally, the method further includes:

The terminal determines whether the RB allocation of the terminal is the RB allocation of the particular type based on a lowest RB index of the RB allocation of the terminal and a resource block length of the RB allocation of the terminal, where
the resource block length is a length of allocated consecutive resource blocks in units of RBs.

In this embodiment, the terminal may determine the type of the RB allocation of the terminal based on the lowest RB index of the RB allocation of the terminal and the resource block length of the RB allocation of the terminal, and may further determine whether the RB allocation is the RB allocation of the particular type based on the type of the RB allocation of the terminal. It should be noted that the foregoing lowest RB index of the RB allocation of the terminal may be denoted as $RB_{start}$, and the resource block length may be denoted as $L_{CRB}$. In addition, the length of the allocated consecutive resource blocks in units of RBs may alternatively be referred to as a quantity of allocated consecutive resource blocks in units of RBs.

Optionally, in a case that the RB allocation of the terminal satisfies a second condition, the RB allocation of the terminal is an RB allocation of a first type, where

the RB allocation of the particular type includes the RB allocation of the first type;
the second condition includes: $L_{CRB} \leq a1$ and $b1 \leq RB_{start} \leq c1$; and $a1 \leq N_{RB}$ and $0 \leq b1 \leq c1 \leq N_{RB}-L_{CRB}$; and $L_{CRB}$ denotes the resource block length, $RB_{start}$ denotes the lowest RB index, and $N_{RB}$ denotes a maximum quantity of RBs in a transmission channel bandwidth configuration and a sub-carrier spacing configuration that are adopted by the terminal.

In this embodiment, a1 may be any value smaller than or equal to $N_{RB}$, and b1 and c1 are any value greater than or equal to 0 and smaller than or equal to $N_{RB}-L_{CRB}$.

In practical application, a1, b1, and c1 may all be properly set according to an actual requirement. In some optional embodiments, at least one of a1, b1, and c1 may be a value specified in a protocol.

It may be understood that because the foregoing RB allocation of the particular type includes the RB allocation of the first type, in a case that the RB allocation of the terminal is the RB allocation of the first type, it indicates that the RB allocation of the terminal is the RB allocation of the particular type. In this case, the terminal may boost the upper limit value of the maximum output power of the terminal based on the target power adjustment value. In a case that the RB allocation of the terminal is not the RB allocation of the first type, the terminal may not boost the upper limit value of the maximum output power of the terminal.

Optionally, a power adjustment value corresponding to the RB allocation of the first type is a first power adjustment value, and the first power adjustment value is greater than 0.

In a case that the RB allocation of the terminal is the RB allocation of the first type, the target power adjustment value is the first power adjustment value.

For example, the foregoing first power adjustment value may be specified in a protocol.

In some optional embodiments, in a case that the RB allocation of the terminal does not satisfy the second condition or the RB allocation of the terminal is not the RB allocation of the first type, the RB allocation of the terminal is an RB allocation of a tenth type, and a power adjustment value corresponding to RB allocation of the tenth type is 0.

This embodiment is described below by using an example.

In this embodiment, based on $RB_{start}$ and $L_{CRB}$ of the RB allocation, the RB allocation may be divided into the following two types or regions. Specifically, if the RB allocation satisfies the following conditions, the RB allocation belongs to a type 1 (namely, the foregoing first type) or a region 1 (Region1), and a size of $\Delta P_{PowerBoost}$ corresponding to the type or region is $x_1$ ($x_1 > 0$) dB, that is, the upper limit of the maximum output power may be boosted by $x_1$ dB:

$L_{CRB} \leq a1$ and $b1 \leq RB_{start} \leq c1$; and $a1 \leq N_{RB}$, and $0 \leq b1 \leq c1 \leq N_{RB}\text{-}L_{CRB}$; and

if the RB allocation does not satisfy the foregoing conditions or does not belong to the type 1 or the region 1, the RB allocation belongs to a type 2 (namely, the foregoing tenth type) or a region 2 (Region2), and a size of $\Delta P_{PowerBoost}$ corresponding to the type or region is 0 dB, that is, the upper limit of the maximum output power remains unchanged. For example, $\Delta P_{PowerBoost}$ may be shown in Table 2.

Table 2

| Modulation | | $\Delta P_{PowerBoost}$ (dB) | |
|---|---|---|---|
| | | Region 1 | Region2 |
| DFT-s-OFDM | QPSK | $x_1$ | 0 |

Optionally, in a case that the RB allocation of the terminal satisfies a third condition, the RB allocation of the terminal is an RB allocation of a second type; and

in a case that the RB allocation of the terminal satisfies a fourth condition, the RB allocation of the terminal is an RB allocation of a third type, where
the RB allocation of the particular type includes the RB allocation of the second type and the RB allocation of the third type;
the third condition includes: $a2 \leq L_{CRB} \leq b2$ and $c2 \leq RB_{start} \leq d2$; and $a2 \leq b2 \leq N_{RB}$ and $0 \leq c2 \leq d2 \leq N_{RB}\text{-}L_{CRB}$;
the fourth condition includes: $a3 \leq L_{CRB} \leq b3$ and $c3 \leq RB_{start} \leq d3$; and $a3 \leq b3 \leq N_{RB}$ and $0 \leq c3 \leq d3 \leq N_{RB}\text{-}L_{CRB}$; and
$L_{CRB}$ denotes the resource block length, $RB_{start}$ denotes the lowest RB index, and $N_{RB}$ denotes a maximum quantity of RBs in a transmission channel bandwidth configuration and a sub-carrier spacing configuration that are adopted by the terminal.

In this embodiment, a2, b2, a3, and b3 may be any value smaller than or equal to $N_{RB}$, and c2, d2, c3, and d3 may be any value greater than or equal to 0 and smaller than or equal to $N_{RB}\text{-}L_{CRB}$. It may be understood that at least one pair of a2 and a3, b2 and b3, c2 and c3, and d2 and d3 are different. For example, a2 and a3 are different, or b2 and b3 are different, or c2 and c3 are different, or d2 and d3 are different.

In practical application, a2, a3, b2, b3, c2, c3, d2, and d3 may all be properly set according to an actual requirement. In some optional embodiments, at least one of a2, a3, b2, b3, c2, c3, d2, and d3 may be a value specified in a protocol.

It may be understood that because the foregoing RB allocation of the particular type includes the RB allocation of the second type and the RB allocation of the third type, in a case that the RB allocation of the terminal is any one of the RB allocation of the second type and the RB allocation of the third type, it indicates that the RB allocation of the terminal is the RB allocation of the particular type. In this case, the terminal may boost the upper limit value of the maximum output power of the terminal based on the target power adjustment value. In a case that the RB allocation of the terminal is neither the RB allocation of the second type nor the RB allocation of the third type, the terminal may not boost the upper limit value of the maximum output power of the terminal.

Optionally, a power adjustment value corresponding to the RB allocation of the second type is a second power adjustment value, and a power adjustment value corresponding to the RB allocation of the third type is a third power adjustment value, where

the second power adjustment value and the third power adjustment value are both greater than 0, in a case that the RB allocation of the terminal is the RB allocation of the second type, the target power adjustment value is the second power adjustment value, and in a case that the RB allocation of the terminal is the RB allocation of the third type, the target power adjustment value is the third power adjustment value.

In this embodiment, the foregoing second power adjustment value is different from the foregoing third power adjustment value. For example, the foregoing second power adjustment value and the foregoing third power adjustment value may both be specified in a protocol.

In practical application, in a case that it is determined that the RB allocation of the terminal is the RB allocation of the second type, the terminal may boost the upper limit value of the maximum output power of the terminal based on the second power adjustment value; and in a case that it is determined that the RB allocation of the terminal is the RB allocation of the third type, the terminal may boost the upper limit value of the maximum output power of the terminal based on the third power adjustment value.

In some optional embodiments, in a case that the RB allocation of the terminal does not satisfy neither the third condition nor the fourth condition or the RB allocation of the terminal is neither the RB allocation of the second type nor the RB allocation of the third type, the RB allocation of the terminal is an RB allocation of an eleventh type, and a power adjustment value corresponding to the RB allocation of the eleventh type is 0.

This embodiment is described below by using an example.

In this embodiment, based on $RB_{start}$ and $L_{CRB}$ of the RB allocation, the RB allocation may be divided into the following three types or regions. Specifically, if the RB allocation satisfies the following conditions, the RB allocation belongs to a type 3 (namely, the foregoing second type) or a region 3 (Region3), and a size of $\Delta P_{PowerBoost}$ corresponding to the type or region is $x_2$ ($x_2 > 0$) dB, that is, the upper limit of the maximum output power may be boosted by $x_2$ dB:

$a2 \leq L_{CRB} \leq b2$ and $c2 \leq RB_{start} \leq d2$; and $a2 \leq b2 \leq N_{RB}$ and $0 \leq c2 \leq d2 \leq N_{RB}-L_{CRB}$;

if the RB allocation satisfies the following conditions, the RB allocation belongs to a type 4 (namely, the foregoing third type) or a region 4 (Region4), and a size of $\Delta P_{PowerBoost}$ corresponding to the type or region is $x_3$ ($x_3 > 0$) dB, that is, the upper limit of the maximum output power may be boosted by $x_3$ dB:

$a3 \leq L_{CRB} \leq b3$ and $c3 \leq RB_{start} \leq d3$; and $a3 \leq b3 \leq N_{RB}$ and $0 \leq c3 \leq d3 \leq N_{RB}-L_{CRB}$; and

if the RB allocation does not satisfy the foregoing conditions or does not belong to the foregoing two types or regions, the RB allocation belongs to a type 5 (namely, the foregoing eleventh type) or a region 5 (Region5), and a size of $\Delta P_{PowerBoost}$ corresponding to the type or region is 0 dB, that is, the upper limit of the maximum output power remains unchanged. For example, $\Delta P_{PowerBoost}$ may be shown in Table 3.

Table 3

| Modulation | | $\Delta P_{PowerBoost}$ (dB) | | |
|---|---|---|---|---|
| | | Region3 | Region4 | Region5 |
| DFT-s-OFDM | QPSK | $x_2$ | $x_3$ | 0 |

Optionally, in a case that the RB allocation of the terminal satisfies a fifth condition, the RB allocation of the terminal is an inner RB allocation (namely, inner RB allocation); or

in a case that the RB allocation of the terminal satisfies a sixth condition, the RB allocation of the terminal is an edge RB allocation (namely, edge RB allocation); or

in a case that the RB allocation of the terminal satisfies neither the fifth condition nor the sixth condition, or in a case that the RB allocation of the terminal is neither the inner RB allocation nor the edge RB allocation, the RB allocation of the terminal is an outer RB allocation (namely, outer RB allocation), where

the fifth condition includes: $L_{CRB} \leq ceil(N_{RB}/2)$ and $RB_{start, low} \leq RB_{start} \leq RB_{start, high}$;

the sixth condition includes: $L_{CRB} \leq 2$, and an RB position allocated by the RB allocation is at an uppermost end or a lowermost end of a channel;

$$RB_{start, low}=\max(1, floor(L_{CRB}/2)), \text{ and } RB_{start, high}=N_{RB}-RB_{Start, Low}-L_{CRB};$$

and

$L_{CRB}$ denotes the resource block length, $RB_{start}$ denotes the lowest RB index, $N_{RB}$ denotes a maximum quantity of RBs in a transmission channel bandwidth configuration and a sub-carrier spacing configuration that are adopted by the terminal, max denotes a function for finding a maximum value, floor denotes a rounding-down function, and ceil denotes a rounding-up function.

Optionally, the RB allocation of the particular type includes the inner RB allocation, where

a power adjustment value corresponding to the inner RB allocation is a fourth power adjustment value, and the fourth power adjustment value is greater than 0; and in a case that the RB allocation of the terminal is the inner RB allocation, the target power adjustment value is the fourth power adjustment value.

For example, the foregoing fourth power adjustment value may be specified in a protocol.

It may be understood that because the foregoing RB allocation of the particular type includes the inner RB allocation, in a case that the RB allocation of the terminal is the inner RB allocation, it indicates that the RB allocation of the terminal is the RB allocation of the particular type. In this case, the terminal may boost the upper limit value of the maximum output power of the terminal based on the fourth power adjustment value. In a case that the RB allocation of the terminal is not the inner RB allocation, the terminal may not boost the upper limit value of the maximum output power of the terminal.

In some optional embodiments, a power adjustment value corresponding to the edge RB allocation and a power adjustment value corresponding to the outer RB allocation may both be 0.

For example, as shown in Table 4, $\Delta P_{PowerBoost}$ corresponding to the inner RB allocation may be $x_4$ ($x_4 > 0$) dB, $\Delta P_{PowerBoost}$ corresponding to the outer RB allocation and the edge RB allocation, respectively, may both be 0.

Table 4

| Modulation | | $\Delta P_{PowerBoost}$ (dB) | |
| --- | --- | --- | --- |
| | | Inner RB allocation | Outer RB allocation and edge RB allocation |
| DFT-s-OFDM | QPSK | $x_4$ | 0 |

Optionally, in a case that the RB allocation of the terminal is the inner RB allocation, if the RB allocation of the terminal satisfies a seventh condition, the RB allocation of the terminal is an RB allocation of a fourth type, where the RB allocation of the particular type includes the RB allocation of the fourth type, and the seventh condition includes: $a4 \leq L_{CRB} \leq b4$ and $c4 \leq RB_{start} \leq d4$; and $a4 \leq b4 \leq ceil(N_{RB}/2)$ and $RB_{start, low} \leq c4 \leq d4 \leq RB_{start, high}$;
or
in a case that the RB allocation of the terminal is the edge RB allocation or the outer RB allocation, if the RB allocation of the terminal satisfies an eighth condition, the RB allocation of the terminal is an RB allocation of a fifth type, where the RB allocation of the particular type includes the RB allocation of the fifth type, and the eighth condition includes: $e1 \leq L_{CRB} \leq f1$ and $g1 \leq RB_{start} \leq h1$; and $ceil(N_{RB}/2) < e1 \leq f1$ and $0 \leq g1 \leq h1 \leq N_{RB} - L_{CRB}$, or $e1 \leq f1 \leq ceil(N_{RB}/2)$ and $RB_{start, high} < g1 \leq h1$, or $e1 \leq f1 \leq ceil(N_{RB}/2)$ and $g1 \leq h1 < RB_{start, low}$.

In this embodiment, a4 and b4 may both be any value less than or equal to $ceil(N_{RB}/2)$, and c4 and d4 may both be any value greater than or equal to $RB_{start, low}$ and less than or equal to $RB_{start, high}$. e1 and f1 may both be any value greater than $ceil(N_{RB}/2)$, and g1 and h1 may both be any value greater than or equal to 0 and less than or equal to $N_{RB} - L_{CRB}$. Alternatively, e1 and f1 may both be any value less than or equal to $ceil(N_{RB}/2)$, and g1 and h1 may both be any value greater than $RB_{start, high}$. Alternatively, e1 and f1 may both be any value less than or equal to $ceil(N_{RB}/2)$, and g1 and h1 may both be any value less than or equal to $RB_{start, low}$.

In practical application, a4, b4, c4, d4, e1, f1, g1, and h1 may all be properly set according to an actual requirement. In some optional embodiments, at least one of a4, b4, c4, d4, e1, f1, g1, and h1 may be a value specified in a protocol.

It may be understood that because the foregoing RB allocation of the particular type includes the RB allocation of the fourth type and the RB allocation of the fifth type, in a case that the RB allocation of the terminal is any one of the RB allocation of the fourth type and the RB allocation of the fifth type, it indicates that the RB allocation of the terminal is the RB allocation of the particular type. In this case, the terminal may boost the upper limit value of the maximum output power of the terminal based on the target power adjustment value. In a case that the RB allocation of the terminal is neither the RB allocation of the fourth type nor the RB allocation of the fifth type, the terminal may not boost the upper limit value of the maximum output power of the terminal.

Optionally, a power adjustment value corresponding to the RB allocation of the fourth type is a fifth power adjustment value, or a power adjustment value corresponding to the RB allocation of the fifth type is a sixth power adjustment value, where
the fifth power adjustment value and the sixth power adjustment value are both greater than 0, in a case that the RB allocation of the terminal is the RB allocation of the fourth type, the target power adjustment value is the fifth power adjustment value, and in a case that the RB allocation of the terminal is the RB allocation of the fifth type, the target power adjustment value is the sixth power adjustment value.

In this embodiment, the foregoing fifth power adjustment value is different from the foregoing sixth power adjustment value. For example, the fifth power adjustment value and the sixth power adjustment value may both be specified in a protocol.

In practical application, in a case that it is determined that the RB allocation of the terminal is the RB allocation of the fourth type, the terminal may boost the upper limit value of the maximum output power of the terminal based on the fifth power adjustment value; and in a case that it is determined that the RB allocation of the terminal is the RB allocation of the fifth type, the terminal may boost the upper limit value of the maximum output power of the terminal based on the sixth power adjustment value.

In some optional embodiments, in a case that the RB allocation of the terminal is the inner RB allocation, if the RB allocation of the terminal does not satisfy the seventh condition or the RB allocation is not the RB allocation of the fourth type, the RB allocation is an RB allocation of a twelfth type, and a power adjustment value corresponding to the RB allocation of the twelfth type is 0;
or

in a case that the RB allocation is the edge RB allocation or the outer RB allocation, if the RB allocation does not satisfy the eighth condition or the RB allocation is not the RB allocation of the fifth type, the RB allocation is an RB allocation of a thirteenth type, and a power adjustment value corresponding to the RB allocation of the thirteenth type is 0.

This embodiment is described below by using an example.

In this embodiment, based on $RB_{start}$ and $L_{CRB}$ of the RB allocation, first, the RB allocation is divided into an inner RB allocation, an outer RB allocation, and an edge RB allocation, and further, the inner RB allocation is divided into two types or two regions, and the outer RB allocation and the edge RB allocation are divided into two types or two regions.

Specifically, in a case that the RB allocation is the inner RB allocation, if the RB allocation satisfies the following conditions, the RB allocation belongs to a type 6 or a region 6 (Region6), and a size of $\Delta P_{PowerBoost}$ corresponding to the type or region is $x_5$ ($x_5 > 0$) dB, that is, the upper limit of the maximum output power may be boosted by $x_5$ dB:

$a4 \leq L_{CRB} \leq b4$ and $c4 \leq RB_{start} \leq d4$; and $a4 \leq b4 \leq ceil(N_{RB}/2)$ and $RB_{start, low} \leq c4 \leq d4 \leq RB_{start, high}$; and
if the RB allocation does not satisfy the foregoing conditions or does not belong to the type 6 or the region 6, the RB allocation belongs to a type 7 or a region 7 (Region7), and a size of $\Delta P_{PowerBoost}$ corresponding to the type or region is 0 dB, that is, the upper limit of the maximum output power remains unchanged.

In a case that the RB allocation is the edge RB allocation or the outer RB allocation, if the RB allocation satisfies the following conditions, the RB allocation belongs to a type 8 or a region 8 (Region8), and a size of $\Delta P_{PowerBoost}$ corresponding to the type or region is $x_6$ ($x_6 > 0$) dB, that is, the upper limit of the maximum output power may be boosted by $x_6$ dB:

$e1 \leq L_{CRB} \leq f1$ and $g1 \leq RB_{start} \leq h1$; and $ceil(N_{RB}/2) < e1 \leq f1$ and $0 \leq g1 \leq h1 \leq N_{RB}-L_{CRB}$, or $e1 \leq f1 \leq ceil(N_{RB}/2)$ and $RB_{start, high} < g1 \leq h1$, or $e1 \leq f1 \leq ceil(N_{RB}/2)$ and $g1 \leq h1 < RB_{start, low}$; and
if the RB allocation does not satisfy the foregoing conditions or does not belong to the type 8 or the region 8, the RB allocation belongs to a type 9 or a region 9 (Region9), and a size of $\Delta P_{PowerBoost}$ corresponding to the type or region is 0 dB, that is, the upper limit of the maximum output power remains unchanged. For example, $\Delta P_{PowerBoost}$ corresponding to an RB allocation belonging to each type or region may be shown in Table 5.

Table 5

| Modulation | | $\Delta P_{PowerBoost}$ (dB) | | | |
|---|---|---|---|---|---|
| | | Inner RB allocation | | Outer RB allocation and edge RB allocation | |
| | | Region6 | Region7 | Region8 | Region9 |
| DFT-s-OFDM | QPSK | $x_5$ | 0 | $x_6$ | 0 |

Optionally, in a case that the RB allocation of the terminal is the inner RB allocation, if the RB allocation of the terminal satisfies a ninth condition, the RB allocation of the terminal is an RB allocation of a sixth type; and if the RB allocation of the terminal satisfies a tenth condition, the RB allocation is an RB allocation of a seventh type, where

the RB allocation of the particular type includes the RB allocation of the sixth type and the RB allocation of the seventh type;
the ninth condition includes: $a5 \leq L_{CRB} \leq b5$ and $c5 \leq RB_{start} \leq d5$; and $a5 \leq b5 \leq ceil(N_{RB}/2)$ and $RB_{start, low} \leq c5 \leq d5 \leq RB_{start, high}$; and
the tenth condition includes: $a6 \leq L_{CRB} \leq b6$ and $c6 \leq RB_{start} \leq d6$; and $a6 \leq b6 \leq ceil(N_{RB}/2)$ and $RB_{start, low} \leq c6 \leq d6 \leq RB_{start, high}$.

In this embodiment, a5, b5, a6, and b6 may be any value less than or equal to $ceil(N_{RB}/2)$, and c5, d5, c6, and d6 may be any value greater than or equal to $RB_{start, low}$ and less than or equal to $RB_{start, high}$. It may be understood that at least one pair of a5 and a6, b5 and b6, c5 and c6, and d5 and d6 are different. For example, a5 and a6 are different, or b5 and b6 are different, or c5 and c6 are different, or d5 and d6 are different.

In practical application, a5, b5, a6, b6, c5, d5, c6, and d6 may all be properly set according to an actual requirement. In some optional embodiments, at least one of a5, b5, a6, b6, c5, d5, c6, or d6 may be a value specified in a protocol.

It may be understood that because the foregoing RB allocation of the particular type includes the RB allocation of the sixth type and the RB allocation of the seventh type, in a case that the RB allocation of the terminal is any one of the RB allocation of the sixth type and the RB allocation of the seventh type, it indicates that the RB allocation of the terminal is the RB allocation of the particular type. In this case, the terminal may boost the upper limit value of the maximum output power of the terminal based on the target power adjustment value. In a case that the RB allocation of the terminal is neither the RB allocation of the sixth type nor the RB allocation of the seventh type, the terminal may not boost the upper limit value of the maximum output power of the terminal.

Optionally, a power adjustment value corresponding to the RB allocation of the sixth type is a seventh power adjustment value, and a power adjustment value corresponding to the RB allocation of the seventh type is an eighth power adjustment value, where

the seventh power adjustment value and the eighth power adjustment value are both greater than 0, in a case that the RB allocation of the terminal is the RB allocation of the sixth type, the target power adjustment value is the seventh power adjustment value, and in a case that the RB allocation of the terminal is the RB allocation of the seventh type, the target power adjustment value is the eighth power adjustment value.

In this embodiment, the seventh power adjustment value is different from the eighth power adjustment value. For example, the seventh power adjustment value and the eighth power adjustment value may both be specified in a protocol.

In practical application, in a case that the RB allocation of the terminal is the inner RB allocation, if it is determined that the RB allocation of the terminal is the RB allocation of the sixth type, the terminal may boost the upper limit value of the maximum output power of the terminal based on the seventh power adjustment value; and if it is determined that the RB allocation of the terminal is the RB allocation of the seventh type, the terminal may boost the upper limit value of the maximum output power of the terminal based on the eighth power adjustment value.

In some optional embodiments, in a case that the RB allocation of the terminal is the inner RB allocation, if the RB allocation the terminal satisfies neither the ninth condition nor the tenth condition, or the RB allocation of the terminal is neither the RB allocation of the sixth type nor the RB allocation of the seventh type, the RB allocation of the terminal is an RB allocation of a fourteenth type, and a power adjustment value corresponding to the RB allocation of the fourteenth type is 0.

Optionally, in a case that the RB allocation of the terminal is the edge RB allocation or the outer RB allocation, if the RB allocation of the terminal satisfies an eleventh condition, the RB allocation of the terminal is an RB allocation of an eighth type; and if the RB allocation of the terminal satisfies a twelfth condition, the RB allocation of the terminal is an RB allocation of a ninth type, where

the RB allocation of the particular type includes the RB allocation of the eighth type and the RB allocation of the ninth type;

the eleventh condition includes: $e2 \leq L_{CRB} \leq f2$ and $g2 \leq RB_{start} \leq h2$; and $\mathrm{ceil}(N_{RB}/2) < e2 \leq f2$ and $0 \leq g2 \leq h2 \leq N_{RB}\text{-}L_{CRB}$, or $e2 \leq f2 \leq \mathrm{ceil}(N_{RB}/2)$ and $RB_{start,\,high} < g2 \leq h2$, or $e2 \leq f2 \leq \mathrm{ceil}(N_{RB}/2)$ and $g2 \leq h2 < RB_{start,\,low}$; and

the twelfth condition includes: $e3 \leq L_{CRB} \leq f3$ and $g3 \leq RB_{start} \leq h3$; and $\mathrm{ceil}(N_{RB}/2) < e3 \leq f3$ and $0 \leq g3 \leq h3 \leq N_{RB}\text{-}L_{CRB}$, or $e3 \leq f3 \leq \mathrm{ceil}(N_{RB}/2)$ and $RB_{start,\,high} < g3 \leq h3$, or $e3 \leq f3 \leq \mathrm{ceil}(N_{RB}/2)$ and $g3 \leq h3 \leq RB_{start,\,low}$.

In this embodiment, e2, f2, e3, and f3 may all be any value greater than $\mathrm{ceil}(N_{RB}/2)$, and g2, h2, g3, and h3 may all be any value greater than or equal to 0 and less than or equal to $N_{RB}\text{-}L_{CRB}$. Alternatively, e2, f2, e3, and f3 may all be any value less than or equal to $\mathrm{ceil}(N_{RB}/2)$, and g2, h2, g3, and h3 may all be any value greater than $RB_{start,\,high}$. Alternatively, e2, f2, e3, and f3 may all be any value less than or equal to $\mathrm{ceil}(N_{RB}/2)$, and g2, h2, g3, and h3 may all be any value less than or equal to $RB_{start,\,low}$.

It may be understood that at least one pair of e2 and e3, f2 and f3, g2 and g3, and h2 and h3 are different. For example, e2 and e3 are different, or f2 and f3 are different, or g2 and g3 are different, or h2 and h3 are different.

In practical application, e2, e3, f2, f3, g2, g3, h2, and h3 may all be properly set according to an actual requirement. In some optional embodiments, at least one of e2, e3, f2, f3, g2, g3, h2, and h3 may be a value specified in a protocol.

It may be understood that because the foregoing RB allocation of the particular type includes the RB allocation of the eighth type and the RB allocation of the ninth type, in a case that the RB allocation of the terminal is any one of the RB allocation of the eighth type and the RB allocation of the ninth type, it indicates that the RB allocation of the terminal is the RB allocation of the particular type. In this case, the terminal may boost the upper limit value of the maximum output power of the terminal based on the target power adjustment value. In a case that the RB allocation of the terminal is neither the RB allocation of the eighth type nor the RB allocation of the ninth type, the terminal may not boost the upper limit value of the maximum output power of the terminal.

Optionally, a power adjustment value corresponding to the RB allocation of the eighth type is a ninth power adjustment value, and a power adjustment value corresponding to the RB allocation of the ninth type is a tenth power adjustment value, where

the ninth power adjustment value and the tenth power adjustment value are both greater than 0, in a case that the RB allocation of the terminal is the RB allocation of the eighth type, the target power adjustment value is the ninth power adjustment value, and in a case that the RB allocation of the terminal is the RB allocation of the ninth type, the target power adjustment value is the tenth power adjustment value.

In this embodiment, the ninth power adjustment value is different from the tenth power adjustment value. For example, the ninth power adjustment value and the tenth power adjustment value may both be specified in a protocol.

In practical application, in a case that the RB allocation of the terminal is the outer RB allocation or the edge RB allocation, if it is determined that the RB allocation of the terminal is the RB allocation of the eighth type, the terminal may boost the upper limit value of the maximum output power of the terminal based on the ninth power adjustment value; and if it is determined that the RB allocation of the terminal is the RB allocation of the ninth type, the terminal may boost the upper limit value of the maximum output power of the terminal based on the tenth power adjustment value.

In some optional embodiments, in a case that the RB allocation of the terminal is the outer RB allocation or the edge RB allocation, if the RB allocation of the terminal satisfies neither the eleventh condition nor the twelfth condition, or the RB allocation of the terminal is neither the RB allocation of the eighth type nor the RB allocation of the ninth type, the RB allocation of the terminal is an RB allocation of a fifteenth type, and a power adjustment value corresponding to the RB allocation of the fifteenth type is 0.

This embodiment is described below by using an example.

In this embodiment, based on $RB_{start}$ and $L_{CRB}$ of the RB allocation, first, the RB allocation is divided into an inner RB allocation, an outer RB allocation, and an edge RB allocation, and further, the inner RB allocation is divided into three types or three regions, and the outer RB allocation and the edge RB allocation are divided into three types or three regions.

Specifically, in a case that the RB allocation is the inner RB allocation, if the RB allocation satisfies the following conditions, the RB allocation belongs to a type 10 or a region 10 (Region10), and a size of $\Delta P_{PowerBoost}$ corresponding to the type or region is $x_7$ ($x_7 > 0$) dB, that is, the upper limit of the maximum output power may be boosted by $x_7$ dB:

$a5 \leq L_{CRB} \leq b5$ and $c5 \leq RB_{start} \leq d5$; and $a5 \leq b5 \leq ceil(N_{RB}/2)$ and $RB_{start, low} \leq c5 \leq d5 \leq RB_{start, high}$;

if the RB allocation satisfies the following conditions, the RB allocation belongs to a type 11 or a region 11 (Region11), and a size of $\Delta P_{PowerBoost}$ corresponding to the type or region is $x_8$ ($x_8 > 0$) dB, that is, the upper limit of the maximum output power may be boosted by $x_8$ dB:

$a6 \leq L_{CRB} \leq b6$ and $c6 \leq RB_{start} \leq d6$; and $a6 \leq b6 \leq ceil(N_{RB}/2)$ and $RB_{start, low} \leq c6 \leq d6 \leq RB_{start, high}$; and

if the RB allocation does not satisfy the foregoing conditions or does not belong to the foregoing two types or regions, the RB allocation belongs to a type 12 or a region 12 (Region12), and a size of $\Delta P_{PowerBoost}$ corresponding to the type or region is 0 dB, that is, the upper limit of the maximum output power remains unchanged.

In a case that the RB allocation is the edge RB allocation or the outer RB allocation, if the RB allocation satisfies the following conditions, the RB allocation belongs to a type 13 or a region 13 (Region13), and a size of $\Delta P_{PowerBoost}$ corresponding to the type or region is $x_9$ ($x_9 > 0$) dB, that is, the upper limit of the maximum output power may be boosted by $x_9$ dB:

$e2 \leq L_{CRB} \leq f2$ and $g2 \leq RB_{start} \leq h2$; and $ceil(N_{RB}/2) < e2 \leq f2$ and $0 \leq g2 \leq h2 \leq N_{RB}-L_{CRB}$, or $e2 \leq f2 \leq ceil(N_{RB}/2)$ and $RB_{start, high} < g2 \leq h2$, or $e2 \leq f2 \leq ceil(N_{RB}/2)$ and $g2 \leq h2 < RB_{start, low}$;

if the RB allocation satisfies the following conditions, the RB allocation belongs to a type 14 or a region 14 (Region14), and a size of $\Delta P_{PowerBoost}$ corresponding to the type or region is $x_{10}$ ($x_{10} > 0$) dB, that is, the upper limit of the maximum output power may be boosted by $x_{10}$ dB:

$e3 \leq L_{CRB} \leq f3$ and $g3 \leq RB_{start} \leq h3$ $ceil(N_{RB}/2) < e3 \leq f3$ and $0 \leq g3 \leq h3 \leq N_{RB}-L_{CRB}$, or $e3 \leq f3 \leq ceil(N_{RB}/2)$ and $RB_{start, high} < g3 \leq h3$, or $e3 \leq f3 \leq ceil(N_{RB}/2)$ and $g3 \leq h3 < RB_{start, low}$; and

if the RB allocation does not satisfy the foregoing conditions or does not belong to the foregoing two types or regions, the RB allocation belongs to a type 15 or a region 15 (Region15), and a size of $\Delta P_{PowerBoost}$ corresponding to the type or region is 0 dB, that is, the upper limit of the maximum output power remains unchanged.

For example, $\Delta P_{PowerBoost}$ corresponding to an RB allocation belonging to each type or region may be shown in Table 6.

Table 6

| Modulation | | $\Delta P_{PowerBoost}$ (dB) | | | | | |
|---|---|---|---|---|---|---|---|
| | | Inner RB allocation | | | Outer RB allocation and edge RB allocation | | |
| | | Region 10 | Region11 | Region12 | Region13 | Region14 | Region 15 |
| DFT-s-OFDM | QPSK | $x_7$ | $x_8$ | 0 | $x_9$ | $x_{10}$ | 0 |

It should be noted that, the foregoing examples are described by using a combination of a modulation waveform and a modulation manner, namely, DFT-s-OFDM QPSK, as an example, but do not limit the modulation waveform and the modulation manner that may be adopted in embodiments of this application. For example, the combination of the modulation waveform and the modulation manner that may be adopted in embodiments of this application may include, but is not limited to, at least one of the following: DFT-s-OFDM and QPSK, CP-OFDM and QPSK, and DFT-s-OFDM and 16QAM.

Optionally, the upper limit value of the boosted maximum output power of the terminal is one of the following:

$$MIN\{P_{EMAX, c}, P_{PowerClass}-\Delta P_{PowerClass}+\Delta P_{PowerBoost}\};$$

and

$$MIN\{P_{EMAX, c}+\Delta P_{PowerBoost}, P_{PowerClass}-\Delta P_{PowerClass}+\Delta P_{PowerBoost}\},$$

where
$P_{EMAX, c}$ denotes the maximum output power value of the terminal that is configured by the network-side device, $P_{PowerClass}$ denotes maximum output power of the terminal at a first power class that is specified in a protocol, $\Delta P_{PowerClass}$ denotes an adjustment value of the maximum output power of the terminal at the first power class, $\Delta P_{PowerBoost}$ denotes the target power adjustment value, the first power class is a power class adopted by the terminal, and MIN denotes a function for finding a minimum value.

In conclusion, according to the output power control method provided in embodiments of this application, in a case that output power boosting on a terminal side is limited, only the upper limit value of the maximum output power is properly boosted without boosting the maximum output power to another power class. In this way, a need for reformulating a maximum power reduction MPR indicator after the power class is changed can be avoided, and it is ensured that the terminal side has a degree of freedom is ensured to autonomously select and implement uplink enhancement. In addition, a boosting manner of the maximum output power of the terminal is simplified, types or regions of the RB configuration are re-divided, and different maximum output power boosting values corresponding to different types or regions are more accurately limited.

Refer to FIG. 3. FIG. 3 is a flowchart of an output power control method according to an embodiment of this application. The method may be performed by a network-side device. As shown in FIG. 3, the method includes the following steps:

Step 301: The network-side device sends indication information to a terminal based on an RB allocation of the terminal, where the indication information indicates the terminal to boost maximum output power of the terminal.

For example, the network-side device may determine whether the RB allocation of the terminal is an RB allocation of a particular type (such as an RB allocation corresponding to a power adjustment value greater than 0), and send the indication information to the terminal in a case that RB allocation of the terminal is the RB allocation of the particular type, or may not send the indication information to the terminal in a case that the RB allocation of the terminal is not the RB allocation of the particular type.

Optionally, the method further includes:
The network-side device receives capability information reported by the terminal, where the capability information indicates that the terminal has a power boosting capability.

Optionally, that the network-side device sends the indication information to the terminal based on the resource block RB allocation of the terminal includes:

The network side device sends the indication information to the terminal in a case that it is determined that the terminal satisfies a first condition and the RB allocation of the terminal is the RB allocation of the particular type, where the first condition includes at least one of the following: a modulation waveform of the terminal is a particular waveform, and a modulation manner of the terminal is a particular modulation manner.

Optionally, the RB allocation of the particular type is an RB allocation corresponding to a power adjustment value greater than 0.

Optionally, the method further includes:

The network-side device determines whether the RB allocation of the terminal is the RB allocation of the particular type based on a lowest RB index of the RB allocation of the terminal and a resource block length of the RB allocation of the terminal, where
the resource block length is a length of allocated consecutive resource blocks in units of RBs.

Optionally, in a case that the RB allocation of the terminal satisfies a second condition, the RB allocation of the terminal is an RB allocation of a first type, where

the RB allocation of the particular type includes the RB allocation of the first type;
the second condition includes: $L_{CRB} \leq a1$ and $b1 \leq RB_{start} \leq c1$; and $a1 \leq N_{RB}$ and $0 \leq b1 \leq c1 \leq N_{RB}-L_{CRB}$; and $L_{CRB}$ denotes the resource block length, $RB_{start}$ denotes the lowest RB index, and $N_{RB}$ denotes a maximum quantity of RBs in a transmission channel bandwidth configuration and a sub-carrier spacing configuration that are adopted by the terminal.

Optionally, a power adjustment value corresponding to the RB allocation of the first type is a first power adjustment value, and the first power adjustment value is greater than 0.

Optionally, in a case that the RB allocation of the terminal satisfies a third condition, the RB allocation of the terminal is an RB allocation of a second type; and

in a case that the RB allocation of the terminal satisfies a fourth condition, the RB allocation of the terminal is an RB allocation of a third type, where
the RB allocation of the particular type includes the RB allocation of the second type and the RB allocation of the third type;
the third condition includes: $a2 \leq L_{CRB} \leq b2$ and $c2 \leq RB_{start} \leq d2$; and $a2 \leq b2 \leq N_{RB}$ and $0 \leq c2 \leq d2 \leq N_{RB}-L_{CRB}$;
the fourth condition includes: $a3 \leq L_{CRB} \leq b3$ and $c3 \leq RB_{start} \leq d3$; and $a3 \leq b3 \leq N_{RB}$ and $0 \leq c3 \leq d3 \leq N_{RB}-L_{CRB}$; and
$L_{CRB}$ denotes the resource block length, $RB_{start}$ denotes the lowest RB index, and $N_{RB}$ denotes a maximum quantity of RBs in a transmission channel bandwidth configuration and a sub-carrier spacing configuration that are adopted by the terminal.

Optionally, a power adjustment value corresponding to the RB allocation of the second type is a second power adjustment value, and a power adjustment value corresponding to the RB allocation of the third type is a third power adjustment value, where
the second power adjustment value and the third power adjustment value are both greater than 0.

Optionally, in a case that the RB allocation of the terminal satisfies a fifth condition, the RB allocation of the terminal is an inner RB allocation; or

in a case that the RB allocation of the terminal satisfies a sixth condition, the RB allocation of the terminal is an edge RB allocation; or
in a case that the RB allocation of the terminal satisfies neither the fifth condition nor the sixth condition, or in a case that the RB allocation of the terminal is neither the inner RB allocation nor the edge RB allocation, the RB allocation is an outer RB allocation, where
the fifth condition includes: $L_{CRB} \leq ceil(N_{RB}/2)$ and $RB_{start, low} \leq RB_{start} \leq RB_{start, high}$;
the sixth condition includes: $L_{CRB} \leq 2$, and an RB position allocated by the RB allocation is at an uppermost end or a lowermost end of a channel;

$$RB_{start, low}=\max(1, floor(L_{CRB}/2)), \text{ and } RB_{start, high}=N_{RB}-RB_{Start, Low}-L_{CRB};$$

and
$L_{CRB}$ denotes the resource block length, $RB_{start}$ denotes the lowest RB index, $N_{RB}$ denotes a maximum quantity of RBs in a transmission channel bandwidth configuration and a sub-carrier spacing configuration that are adopted by the terminal, max denotes a function for finding a maximum value, floor denotes a rounding-down function, and ceil denotes a rounding-up function.

Optionally, the RB allocation of the particular type includes the inner RB allocation, where
a power adjustment value corresponding to the inner RB allocation is a fourth power adjustment value, and the fourth power adjustment value is greater than 0.

Optionally, in a case that the RB allocation of the terminal is the inner RB allocation, if the RB allocation of the terminal satisfies a seventh condition, the RB allocation of the terminal is an RB allocation of a fourth type, where the RB allocation of the particular type includes the RB allocation of the fourth type, and the seventh condition includes: $a4 \leq L_{CRB} \leq b4$ and $c4 \leq RB_{start} \leq d4$; and $a4 \leq b4 \leq ceil(N_{RB}/2)$ and $RB_{start, low} \leq c4 \leq d4 \leq RB_{start, high}$;
or
in a case that the RB allocation of the terminal is the edge RB allocation or the outer RB allocation, if the RB allocation of the terminal satisfies an eighth condition, the RB allocation of the terminal is an RB allocation of a fifth type, where the RB allocation of the particular type includes the RB allocation of the fifth type, and the eighth condition includes: $e1 \leq L_{CRB} \leq f1$ and $g1 \leq RB_{start} \leq h1$; and $ceil(N_{RB}/2) < e1 \leq f1$ and $0 \leq g1 \leq h1 \leq N_{RB}-L_{CRB}$, or $e1 \leq f1 \leq ceil(N_{RB}/2)$ and $RB_{start, high} < g1 \leq h1$, or $e1 \leq f1 \leq ceil(N_{RB}/2)$ and $g1 \leq h1 < RB_{start, low}$.

Optionally, a power adjustment value corresponding to the RB allocation of the fourth type is a fifth power adjustment value, or a power adjustment value corresponding to the RB allocation of the fifth type is a sixth power adjustment value, where

the fifth power adjustment value and the sixth power adjustment value are both greater than 0.

Optionally, in a case that the RB allocation of the terminal is the inner RB allocation, if the RB allocation of the terminal satisfies a ninth condition, the RB allocation of the terminal is an RB allocation of a sixth type; and if the RB allocation of the terminal satisfies a tenth condition, the RB allocation is an RB allocation of a seventh type, where

the RB allocation of the particular type includes the RB allocation of the sixth type and the RB allocation of the seventh type;

the ninth condition includes: $a5 \leq L_{CRB} \leq b5$ and $c5 \leq RB_{start} \leq d5$; and $a5 \leq b5 \leq ceil(N_{RB}/2)$ and $RB_{start, low} \leq c5 \leq d5 \leq RB_{start, high}$; and

the tenth condition includes: $a6 \leq L_{CRB} \leq b6$ and $c6 \leq RB_{start} \leq d6$; and $a6 \leq b6 \leq ceil(N_{RB}/2)$ and $RB_{start, low} \leq c6 \leq d6 \leq RB_{start, high}$.

Optionally, a power adjustment value corresponding to the RB allocation of the sixth type is a seventh power adjustment value, and a power adjustment value corresponding to the RB allocation of the seventh type is an eighth power adjustment value, where

the seventh power adjustment value and the eighth power adjustment value are both greater than 0.

Optionally, in a case that the RB allocation of the terminal is the edge RB allocation or the outer RB allocation, if the RB allocation of the terminal satisfies an eleventh condition, the RB allocation of the terminal is an RB allocation of an eighth type; and if the RB allocation of the terminal satisfies a twelfth condition, the RB allocation of the terminal is an RB allocation of a ninth type, where

the RB allocation of the particular type includes the RB allocation of the eighth type and the RB allocation of the ninth type;

the eleventh condition includes: $e2 \leq L_{CRB} \leq f2$ and $g2 \leq RB_{start} \leq h2$; and $ceil(N_{RB}/2) < e2 \leq f2$ and $0 \leq g2 \leq h2 \leq N_{RB}-L_{CRB}$, or $e2 \leq f2 \leq ceil(N_{RB}/2)$ and $RB_{start, high} < g2 \leq h2$, or $e2 \leq f2 \leq ceil(N_{RB}/2)$ and $g2 \leq h2 < RB_{start, low}$; and

the twelfth condition includes: $e3 \leq L_{CRB} \leq f3$ and $g3 \leq RB_{start} \leq h3$; and $ceil(N_{RB}/2) < e3 \leq f3$ and $0 \leq g3 \leq h3 \leq N_{RB}-L_{CRB}$, or $e3 \leq f3 \leq ceil(N_{RB}/2)$ and $RB_{start, high} < g3 \leq h3$, or $e3 \leq f3 \leq ceil(N_{RB}/2)$ and $g3 \leq h3 < RB_{start, low}$.

Optionally, a power adjustment value corresponding to the RB allocation of the eighth type is a ninth power adjustment value, and a power adjustment value corresponding to the RB allocation of the ninth type is a tenth power adjustment value, where

the ninth power adjustment value and the tenth power adjustment value are both greater than 0.

Optionally, the particular waveform includes one of the following: discrete Fourier transform-spread-orthogonal frequency division multiplexing DFT-s-OFDM and cyclic prefix-orthogonal frequency division multiplexing CP-OFDM; or the particular modulation manner includes one of the following: quadrature phase-shift keying QPSK and quadrature amplitude modulation QAM.

It should be noted that for an implementation manner of this implementation, refer to the related descriptions of the embodiment shown in FIG. 2. Details are not described herein again.

It should be noted that the output power control method provided in embodiments of this application may be performed by an output power control apparatus or a control module that is in the output power control apparatus and that is configured to perform the output power control method. In embodiments of this application, an output power control apparatus provided in embodiments of this application is described by using an example in which the output power control apparatus performs the output power control method.

Refer to FIG. 4. FIG. 4 is a diagram of a structure of an output power control apparatus according to an embodiment of this application. As shown in FIG. 4, an output power control apparatus 400 includes:

a boosting module 401, configured to boost an upper limit value of maximum output power of a terminal based on a target power adjustment value, where

a lower limit value of the maximum output power of the terminal remains unchanged, or the target power adjustment value is related to a resource block RB allocation of the terminal.

Optionally, the apparatus further includes:

a first sending module, configured to report capability information of the terminal to a network-side device before the upper limit value of the maximum output power of the terminal is boosted based on the target power adjustment value, where the capability information indicates that the terminal has a power boosting capability; and
a first receiving module, configured to receive indication information from the network-side device, where the indication information indicates the terminal to boost the maximum output power of the terminal.

Optionally, the apparatus further includes:
a first determining module, configured to determine the target power adjustment value based on the RB allocation of the terminal.

Optionally, the target power adjustment value is a power adjustment value corresponding to the RB allocation of the terminal, where different types of RB allocations correspond to different power adjustment values.

Optionally, the boosting module is specifically configured to:

boost the upper limit value of the maximum output power of the terminal based on the target power adjustment value in a case that a first condition is satisfied and the RB allocation of the terminal is an RB allocation of a particular type, where
the first condition includes at least one of the following: a modulation waveform of the terminal is a particular waveform, and a modulation manner of the terminal is a particular modulation manner.

Optionally, the RB allocation of the particular type is an RB allocation corresponding to a power adjustment value greater than 0.

Optionally, the apparatus further includes:

a second determining module, configured to determine whether the RB allocation of the terminal is the RB allocation of the particular type based on a lowest RB index of the RB allocation of the terminal and a resource block length of the RB allocation of the terminal, where
the resource block length is a length of allocated consecutive resource blocks in units of RBs.

Optionally, in a case that the RB allocation of the terminal satisfies a second condition, the RB allocation of the terminal is an RB allocation of a first type, where

the RB allocation of the particular type includes the RB allocation of the first type;
the second condition includes: $L_{CRB} \leq a1$ and $b1 \leq RB_{start} \leq c1$; and $a1 \leq N_{RB}$ and $0 \leq b1 \leq c1 \leq N_{RB}\text{-}L_{CRB}$; and $L_{CRB}$ denotes the resource block length, $RB_{start}$ denotes the lowest RB index, and $N_{RB}$ denotes a maximum quantity of RBs in a transmission channel bandwidth configuration and a sub-carrier spacing configuration that are adopted by the terminal.

Optionally, a power adjustment value corresponding to the RB allocation of the first type is a first power adjustment value, and the first power adjustment value is greater than 0.

In a case that the RB allocation of the terminal is the RB allocation of the first type, the target power adjustment value is the first power adjustment value.

Optionally, in a case that the RB allocation of the terminal satisfies a third condition, the RB allocation of the terminal is an RB allocation of a second type; and

in a case that the RB allocation of the terminal satisfies a fourth condition, the RB allocation of the terminal is an RB allocation of a third type, where
the RB allocation of the particular type includes the RB allocation of the second type and the RB allocation of the third type;
the third condition includes: $a2 \leq L_{CRB} \leq b2$ and $c2 \leq RB_{start} \leq d2$; and $a2 \leq b2 \leq N_{RB}$ and $0 \leq c2 \leq d2 \leq N_{RB}\text{-}L_{CRB}$;
the fourth condition includes: $a3 \leq L_{CRB} \leq b3$ and $c3 \leq RB_{start} \leq d3$; and $a3 \leq b3 \leq N_{RB}$ and $0 \leq c3 \leq d3 \leq N_{RB}\text{-}L_{CRB}$; and
$L_{CRB}$ denotes the resource block length, $RB_{start}$ denotes the lowest RB index, and $N_{RB}$ denotes a maximum quantity of RBs in a transmission channel bandwidth configuration and a sub-carrier spacing configuration that are adopted by the terminal.

Optionally, a power adjustment value corresponding to the RB allocation of the second type is a second power adjustment value, and a power adjustment value corresponding to the RB allocation of the third type is a third power adjustment value, where

the second power adjustment value and the third power adjustment value are both greater than 0, in a case that the RB allocation of the terminal is the RB allocation of the second type, the target power adjustment value is the second power adjustment value, and in a case that the RB allocation of the terminal is the RB allocation of the third type, the target power adjustment value is the third power adjustment value.

Optionally, in a case that the RB allocation of the terminal satisfies a fifth condition, the RB allocation of the terminal is an inner RB allocation; or

in a case that the RB allocation of the terminal satisfies a sixth condition, the RB allocation of the terminal is an edge RB allocation; or

in a case that the RB allocation of the terminal satisfies neither the fifth condition nor the sixth condition, or in a case that the RB allocation of the terminal is neither the inner RB allocation nor the edge RB allocation, the RB allocation is an outer RB allocation, where

the fifth condition includes: $L_{CRB} \leq ceil(N_{RB}/2)$ and $RB_{start,\ low} \leq RB_{start} \leq RB_{start,\ high}$;

the sixth condition includes: $L_{CRB} \leq 2$, and an RB position allocated by the RB allocation is at an uppermost end or a lowermost end of a channel;

$$RB_{start,\ low} = max(1,\ floor(L_{CRB}/2)),\ and\ RB_{start,\ high} = N_{RB} - RB_{Start,\ Low} - L_{CRB};$$

and

$L_{CRB}$ denotes the resource block length, $RB_{start}$ denotes the lowest RB index, $N_{RB}$ denotes a maximum quantity of RBs in a transmission channel bandwidth configuration and a sub-carrier spacing configuration that are adopted by the terminal, max denotes a function for finding a maximum value, floor denotes a rounding-down function, and ceil denotes a rounding-up function.

Optionally, the RB allocation of the particular type includes the inner RB allocation, where

a power adjustment value corresponding to the inner RB allocation is a fourth power adjustment value, and the fourth power adjustment value is greater than 0; and in a case that the RB allocation of the terminal is the inner RB allocation, the target power adjustment value is the fourth power adjustment value.

Optionally, in a case that the RB allocation of the terminal is the inner RB allocation, if the RB allocation of the terminal satisfies a seventh condition, the RB allocation of the terminal is an RB allocation of a fourth type, where the RB allocation of the particular type includes the RB allocation of the fourth type, and the seventh condition includes: $a4 \leq L_{CRB} \leq b4$ and $c4 \leq RB_{start} \leq d4$; and $a4 \leq b4 \leq ceil(N_{RB}/2)$ and $RB_{start,\ low} \leq c4 \leq d4 \leq RB_{start,\ high}$; or

in a case that the RB allocation of the terminal is the edge RB allocation or the outer RB allocation, if the RB allocation of the terminal satisfies an eighth condition, the RB allocation of the terminal is an RB allocation of a fifth type, where the RB allocation of the particular type includes the RB allocation of the fifth type, and the eighth condition includes: $e1 \leq L_{CRB} \leq f1$ and $g1 \leq RB_{start} \leq h1$; and $ceil(N_{RB}/2) < e1 \leq f1$ and $0 \leq g1 \leq h1 \leq N_{RB} - L_{CRB}$, or $e1 \leq f1 \leq ceil(N_{RB}/2)$ and $RB_{start,\ high} < g1 \leq h1$, or $e1 \leq f1 \leq ceil(N_{RB}/2)$ and $g1 \leq h1 < RB_{start,\ low}$.

Optionally, a power adjustment value corresponding to the RB allocation of the fourth type is a fifth power adjustment value, or a power adjustment value corresponding to the RB allocation of the fifth type is a sixth power adjustment value, where

the fifth power adjustment value and the sixth power adjustment value are both greater than 0, in a case that the RB allocation of the terminal is the RB allocation of the fourth type, the target power adjustment value is the fifth power adjustment value, and in a case that the RB allocation of the terminal is the RB allocation of the fifth type, the target power adjustment value is the sixth power adjustment value.

Optionally, in a case that the RB allocation of the terminal is the inner RB allocation, if the RB allocation of the terminal satisfies a ninth condition, the RB allocation of the terminal is an RB allocation of a sixth type; and if the RB allocation of the terminal satisfies a tenth condition, the RB allocation is an RB allocation of a seventh type, where

the RB allocation of the particular type includes the RB allocation of the sixth type and the RB allocation of the seventh type;

the ninth condition includes: $a5 \leq L_{CRB} \leq b5$ and $c5 \leq RB_{start} \leq d5$; and $a5 \leq b5 \leq ceil(N_{RB}/2)$ and $RB_{start,\ low} \leq c5 \leq d5 \leq RB_{start,\ high}$; and

the tenth condition includes: $a6 \leq L_{CRB} \leq b6$ and $c6 \leq RB_{start} \leq d6$; and $a6 \leq b6 \leq ceil(N_{RB}/2)$ and $RB_{start,\ low} \leq c6 \leq d6 \leq RB_{start,\ high}$.

Optionally, a power adjustment value corresponding to the RB allocation of the sixth type is a seventh power adjustment value, and a power adjustment value corresponding to the RB allocation of the seventh type is an eighth power adjustment value, where

the seventh power adjustment value and the eighth power adjustment value are both greater than 0, in a case that the RB allocation of the terminal is the RB allocation of the sixth type, the target power adjustment value is the seventh power adjustment value, and in a case that the RB allocation of the terminal is the RB allocation of the seventh type, the target power adjustment value is the eighth power adjustment value.

Optionally, in a case that the RB allocation of the terminal is the edge RB allocation or the outer RB allocation, if the RB allocation of the terminal satisfies an eleventh condition, the RB allocation of the terminal is an RB allocation of an eighth type; and if the RB allocation of the terminal satisfies a twelfth condition, the RB allocation of the terminal is an RB allocation of a ninth type, where

the RB allocation of the particular type includes the RB allocation of the eighth type and the RB allocation of the ninth type;

the eleventh condition includes: $e2 \leq L_{CRB} \leq f2$ and $g2 \leq RB_{start} \leq h2$; and $ceil(N_{RB}/2) < e2 \leq f2$ and $0 \leq g2 \leq h2 \leq N_{RB}-L_{CRB}$, or $e2 \leq f2 \leq ceil(N_{RB}/2)$ and $RB_{start, high} < g2 \leq h2$, or $e2 \leq f2 \leq ceil(N_{RB}/2)$ and $g2 \leq h2 < RB_{start, low}$; and

the twelfth condition includes: $e3 \leq L_{CRB} \leq f3$ and $g3 \leq RB_{start} \leq h3$; and $ceil(N_{RB}/2) < e3 \leq f3$ and $0 \leq g3 \leq h3 \leq N_{RB}-L_{CRB}$, or $e3 \leq f3 \leq ceil(N_{RB}/2)$ and $RB_{start, high} < g3 \leq h3$, or $e3 \leq f3 \leq ceil(N_{RB}/2)$ and $g3 \leq h3 < RB_{start, low}$.

Optionally, a power adjustment value corresponding to the RB allocation of the eighth type is a ninth power adjustment value, and a power adjustment value corresponding to the RB allocation of the ninth type is a tenth power adjustment value, where

the ninth power adjustment value and the tenth power adjustment value are both greater than 0, in a case that the RB allocation of the terminal is the RB allocation of the eighth type, the target power adjustment value is the ninth power adjustment value, and in a case that the RB allocation of the terminal is the RB allocation of the ninth type, the target power adjustment value is the tenth power adjustment value.

Optionally, the upper limit value of the boosted maximum output power of the terminal is one of the following:

$$MIN\{P_{EMAX, c}, \ P_{PowerClass}-\Delta P_{PowerClass}+\Delta P_{PowerBoost}\};$$

and

$$MIN\{P_{EMAX, c}+\Delta P_{PowerBoost}, \ P_{PowerClass}-\Delta P_{PowerClass}+\Delta P_{PowerBoost}\},$$

where

$P_{EMAX, c}$ denotes the maximum output power value of the terminal that is configured by the network-side device, $P_{PowerClass}$ denotes maximum output power of the terminal at a first power class that is specified in a protocol, $\Delta P_{PowerClass}$ denotes an adjustment value of the maximum output power of the terminal at the first power class, $\Delta P_{PowerBoost}$ denotes the target power adjustment value, the first power class is a power class adopted by the terminal, and MIN denotes a function for finding a minimum value.

Optionally, the particular waveform includes one of the following: discrete Fourier transform-spread-orthogonal frequency division multiplexing DFT-s-OFDM and cyclic prefix-orthogonal frequency division multiplexing CP-OFDM; or the particular modulation manner includes one of the following: quadrature phase-shift keying QPSK and quadrature amplitude modulation QAM.

The output power control apparatus in embodiments of this application may be an electronic device, such as an electronic device having an operating system, or a component in an electronic device, such as an integrated circuit or a chip. The electronic device may be a terminal, or may be another device other than a terminal. For example, the terminal may include, but is not limited to, the types of the terminal 11 listed above, and the another device may be a server, a network attached storage (Network Attached Storage, NAS), or the like. This is not specifically limited in embodiments of this application.

The output power control apparatus provided in embodiments of this application can implement all processes implemented by the method embodiment in FIG. 2 and same technical effects are achieved. To avoid repetition, details are not described herein again.

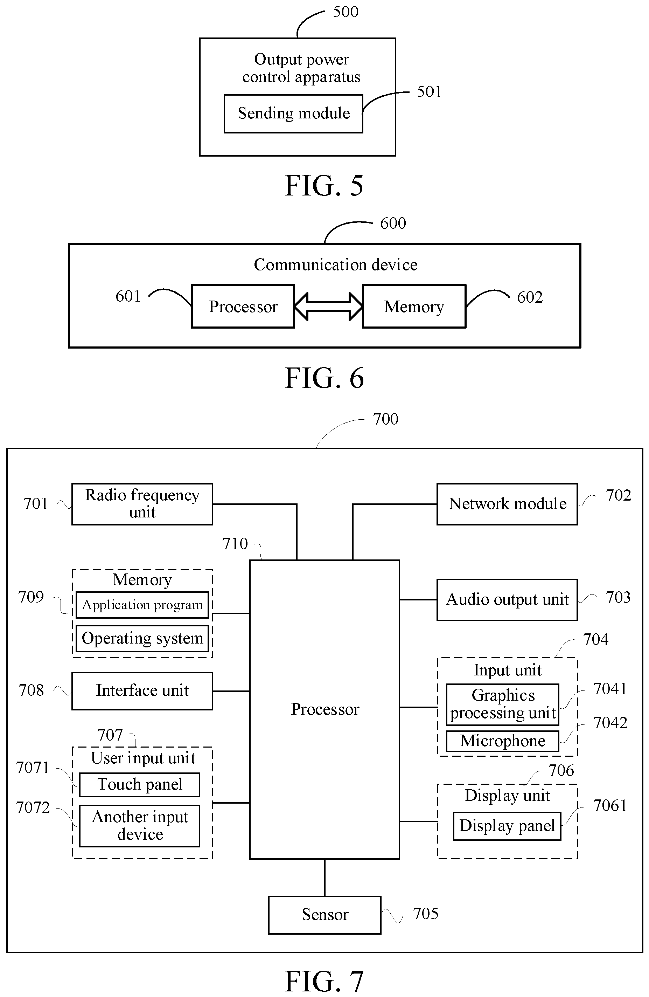

Refer to FIG. 5. FIG. 5 is a diagram of a structure of an output power control apparatus according to an embodiment of this application. As shown in FIG. 5, an output power control apparatus 500 includes:

a sending module 501, configured to send indication information to a terminal based on an RB allocation of the terminal, where the indication information indicates the terminal to boost maximum output power of the terminal.

Optionally, the apparatus further includes:

a second receiving module, configured to receive capability information reported by the terminal, where the capability information indicates that the terminal has a power boosting capability.

Optionally, the sending module is specifically configured to:

send the indication information to the terminal in a case that it is determined that the terminal satisfies a first condition and the RB allocation of the terminal is an RB allocation of a particular type, where

the first condition includes at least one of the following: a modulation waveform of the terminal is a particular waveform, and a modulation manner of the terminal is a particular modulation manner.

Optionally, the RB allocation of the particular type is an RB allocation corresponding to a power adjustment value greater than 0.

Optionally, the apparatus further includes:

a third determining module, configured to determine whether the RB allocation of the terminal is the RB allocation of the particular type based on a lowest RB index of the RB allocation of the terminal and a resource block length of the RB allocation of the terminal, where

the resource block length is a length of allocated consecutive resource blocks in units of RBs.

Optionally, in a case that the RB allocation of the terminal satisfies a second condition, the RB allocation of the terminal is an RB allocation of a first type, where

the RB allocation of the particular type includes the RB allocation of the first type;

the second condition includes: $L_{CRB} \leq a1$ and $b1 \leq RB_{start} \leq c1$; and $a1 \leq N_{RB}$ and $0 \leq b1 \leq c1 \leq N_{RB}-L_{CRB}$; and $L_{CRB}$ denotes the resource block length, $RB_{start}$ denotes the lowest RB index, and $N_{RB}$ denotes a maximum quantity of RBs in a transmission channel bandwidth configuration and a sub-carrier spacing configuration that are adopted by the terminal.

Optionally, a power adjustment value corresponding to the RB allocation of the first type is a first power adjustment value, and the first power adjustment value is greater than 0.

Optionally, in a case that the RB allocation of the terminal satisfies a third condition, the RB allocation of the terminal is an RB allocation of a second type; and

in a case that the RB allocation of the terminal satisfies a fourth condition, the RB allocation of the terminal is an RB allocation of a third type, where

the RB allocation of the particular type includes the RB allocation of the second type and the RB allocation of the third type;

the third condition includes: $a2 \leq L_{CRB} \leq b2$ and $c2 \leq RB_{start} \leq d2$; and $a2 \leq b2 \leq N_{RB}$ and $0 \leq c2 \leq d2 \leq N_{RB}-L_{CRB}$;

the fourth condition includes: $a3 \leq L_{CRB} \leq b3$ and $c3 \leq RB_{start} \leq d3$; and $a3 \leq b3 \leq N_{RB}$ and $0 \leq c3 \leq d3 \leq N_{RB}-L_{CRB}$; and $L_{CRB}$ denotes the resource block length, $RB_{start}$ denotes the lowest RB index, and $N_{RB}$ denotes a maximum quantity of RBs in a transmission channel bandwidth configuration and a sub-carrier spacing configuration that are adopted by the terminal.

Optionally, a power adjustment value corresponding to the RB allocation of the second type is a second power adjustment value, and a power adjustment value corresponding to the RB allocation of the third type is a third power adjustment value, where

the second power adjustment value and the third power adjustment value are both greater than 0.

Optionally, in a case that the RB allocation of the terminal satisfies a fifth condition, the RB allocation of the terminal is an inner RB allocation; or

in a case that the RB allocation of the terminal satisfies a sixth condition, the RB allocation of the terminal is an edge RB allocation; or

in a case that the RB allocation of the terminal satisfies neither the fifth condition nor the sixth condition, or in a case that the RB allocation of the terminal is neither the inner RB allocation nor the edge RB allocation, the RB allocation is an outer RB allocation, where

the fifth condition includes: $L_{CRB} \leq ceil(N_{RB}/2)$ and $RB_{start, low} \leq RB_{start} \leq RB_{start, high}$;

the sixth condition includes: $L_{CRB} \leq 2$, and an RB position allocated by the RB allocation is at an uppermost end or a lowermost end of a channel;

$RB_{start, low}$=max(1, floor($L_{CRB}/2$)), and $RB_{start, high}$=$N_{RB}$-$RB_{Start, Low}$-$L_{CRB}$; and

$L_{CRB}$ denotes the resource block length, $RB_{start}$ denotes the lowest RB index, $N_{RB}$ denotes a maximum quantity of RBs in a transmission channel bandwidth configuration and a sub-carrier spacing configuration that are adopted by the terminal, max denotes a function for finding a maximum value, floor denotes a rounding-down function, and ceil denotes a rounding-up function.

Optionally, the RB allocation of the particular type includes the inner RB allocation, where a power adjustment value corresponding to the inner RB allocation is a fourth power adjustment value, and the fourth power adjustment value is greater than 0.

Optionally, in a case that the RB allocation of the terminal is the inner RB allocation, if the RB allocation of the terminal satisfies a seventh condition, the RB allocation of the terminal is an RB allocation of a fourth type, where the RB allocation of the particular type includes the RB allocation of the fourth type, and the seventh condition includes: $a4 \leq L_{CRB} \leq$ b4 and $c4 \leq RB_{start} \leq d4$; and $a4 \leq b4 \leq$ ceil($N_{RB}/2$) and $RB_{start, low} \leq c4 \leq d4 \leq RB_{start, high}$;

or

in a case that the RB allocation of the terminal is the edge RB allocation or the outer RB allocation, if the RB allocation of the terminal satisfies an eighth condition, the RB allocation of the terminal is an RB allocation of a fifth type, where the RB allocation of the particular type includes the RB allocation of the fifth type, and the eighth condition includes: $e1 \leq L_{CRB} \leq f1$ and $g1 \leq RB_{start} \leq h1$; and ceil($N_{RB}/2$) < $e1 \leq f1$ and $0 \leq g1 \leq h1 \leq N_{RB}$-$L_{CRB}$, or $e1 \leq f1 \leq$ ceil($N_{RB}/2$) and $RB_{start, high}$ < $g1 \leq h1$, or $e1 \leq f1 \leq$ ceil($N_{RB}/2$) and $g1 \leq h1 < RB_{start, low}$.

Optionally, a power adjustment value corresponding to the RB allocation of the fourth type is a fifth power adjustment value, or a power adjustment value corresponding to the RB allocation of the fifth type is a sixth power adjustment value, where the fifth power adjustment value and the sixth power adjustment value are both greater than 0.

Optionally, in a case that the RB allocation of the terminal is the inner RB allocation, if the RB allocation of the terminal satisfies a ninth condition, the RB allocation of the terminal is an RB allocation of a sixth type; and if the RB allocation of the terminal satisfies a tenth condition, the RB allocation is an RB allocation of a seventh type, where

the RB allocation of the particular type includes the RB allocation of the sixth type and the RB allocation of the seventh type;

the ninth condition includes: $a5 \leq L_{CRB} \leq b5$ and $c5 \leq RB_{start} \leq d5$; and $a5 \leq b5 \leq$ ceil($N_{RB}/2$) and $RB_{start, low} \leq c5 \leq d5 \leq RB_{start, high}$; and

the tenth condition includes: $a6 \leq L_{CRB} \leq b6$ and $c6 \leq RB_{start} \leq d6$; and $a6 \leq b6 \leq$ ceil($N_{RB}/2$) and $RB_{start, low} \leq c6 \leq d6 \leq RB_{start, high}$.

Optionally, a power adjustment value corresponding to the RB allocation of the sixth type is a seventh power adjustment value, and a power adjustment value corresponding to the RB allocation of the seventh type is an eighth power adjustment value, where the seventh power adjustment value and the eighth power adjustment value are both greater than 0.

Optionally, in a case that the RB allocation of the terminal is the edge RB allocation or the outer RB allocation, if the RB allocation of the terminal satisfies an eleventh condition, the RB allocation of the terminal is an RB allocation of an eighth type; and if the RB allocation of the terminal satisfies a twelfth condition, the RB allocation of the terminal is an RB allocation of a ninth type, where

the RB allocation of the particular type includes the RB allocation of the eighth type and the RB allocation of the ninth type;

the eleventh condition includes: $e2 \leq L_{CRB} \leq f2$ and $g2 \leq RB_{start} \leq h2$; and ceil($N_{RB}/2$) < $e2 \leq f2$ and $0 \leq g2 \leq h2 \leq N_{RB}$-$L_{CRB}$, or $e2 \leq f2 \leq$ ceil($N_{RB}/2$) and $RB_{start, high}$ < $g2 \leq h2$, or $e2 \leq f2 \leq$ ceil($N_{RB}/2$) and $g2 \leq h2 < RB_{start, low}$; and

the twelfth condition includes: $e3 \leq L_{CRB} \leq f3$ and $g3 \leq RB_{start} \leq h3$; and ceil($N_{RB}/2$) < $e3 \leq f3$ and $0 \leq g3 \leq h3 \leq N_{RB}$-$L_{CRB}$, or $e3 \leq f3 \leq$ ceil($N_{RB}/2$) and $RB_{start, high}$ < $g3 \leq h3$, or $e3 \leq f3 \leq$ ceil($N_{RB}/2$) and $g3 \leq h3 \leq RB_{start, low}$.

Optionally, a power adjustment value corresponding to the RB allocation of the eighth type is a ninth power adjustment value, and a power adjustment value corresponding to the RB allocation of the ninth type is a tenth power adjustment value, where the ninth power adjustment value and the tenth power adjustment value are both greater than 0.

Optionally, the particular waveform includes one of the following: discrete Fourier transform-spread-orthogonal frequency division multiplexing DFT-s-OFDM and cyclic prefix-orthogonal frequency division multiplexing CP-OFDM; or

the particular modulation manner includes one of the following: quadrature phase-shift keying QPSK and quadrature amplitude modulation QAM.

The output power control apparatus in embodiments of this application may be an electronic device, such as an electronic device having an operating system, or a component in an electronic device, such as an integrated circuit or a chip. The electronic device may be a network-side device, or may be another device other than a network-side device. For example, the network-side device may include, but is not limited to, the types of the network-side device 12 listed above, and the another device may be a server, a network attached storage (Network Attached Storage, NAS), or the like. This is not specifically limited in embodiments of this application.

The output power control apparatus provided in embodiments of this application can implement all processes implemented by the method embodiment in FIG. 3 and same technical effects are achieved. To avoid repetition, details are not described herein again.

Optionally, as shown in FIG. 6, an embodiment of this application further provides a communication device 600, including a processor 601 and a memory 602. The memory 602 stores a program or instructions runnable on the processor 601. For example, when the communication device 600 is a terminal, the program or instructions are executed by the processor 601 to implement various steps of the foregoing terminal-side output power control method embodiments, and same technical effects can be achieved. When the communication device 600 is a network-side device, the program or instructions are executed by the processor 601 to implement various steps of the foregoing network-side output power control method embodiments, and same technical effects can be achieved. To avoid repetition, details are not described herein again.

An embodiment of this application further provides a terminal, including a processor and a communication interface. The processor is configured to boost an upper limit value of maximum output power of the terminal based on a target power adjustment value, where a lower limit value of the maximum output power of the terminal remains unchanged, or the target power adjustment value is related to a resource block RB allocation of the terminal. This terminal embodiment corresponds to the foregoing terminal-side method embodiments, and each implementation process and implementation of the foregoing method embodiments are applicable to the terminal embodiment, and same technical effects can be achieved. Specifically, FIG. 7 is a schematic diagram of a hardware structure of a terminal according to an embodiment of this application.

A terminal 700 includes, but is not limited to, at least some components of a radio frequency unit 701, a network module 702, an audio output unit 703, an input unit 704, a sensor 705, a display unit 706, a user input unit 707, an interface unit 708, a memory 709, a processor 710, and the like.

A person skilled in the art may understand that the terminal 700 may further include a power supply (such as a battery) that supplies power to each component. The power supply may be logically connected to the processor 710 through a power management system, so that functions such as charging management, discharging management, and power consumption management are implemented through the power management system. The terminal structure shown in FIG. 7 does not constitute a limitation to the terminal. The terminal may include more or fewer components than those shown in the figure, or some components may be combined, or different component arrangements may be used. Details are not described herein again.

It should be understood that in embodiments of this application, the input unit 704 may include a graphics processing unit (Graphics Processing Unit, GPU) 7041 and a microphone 7042. The graphics processing unit 7041 processes image data of a static picture or a video that is obtained by an image acquisition device (such as a camera) in a video acquisition mode or an image acquisition mode. The display unit 706 may include a display panel 7061. The display panel 7061 may be configured by using a liquid crystal display, an organic light-emitting diode, or the like. The user input unit 707 includes at least one of a touch panel 7071 and another input device 7072. The touch panel 7071 is also referred to as a touchscreen. The touch panel 7071 may include two parts: a touch detection apparatus and a touch controller. The another input device 7072 may include, but is not limited to, a physical keyboard, a functional key (such as a volume control key or a switch key), a track ball, a mouse, and a joystick. Details are not described herein again.

In embodiments of this application, the ratio frequency unit 701 may transmit downlink data to the processor 710 for processing after receiving the downlink data from a network-side device. In addition, the radio frequency unit 701 may send uplink data to the network-side device. Generally, the radio frequency unit 701 includes, but is not limited to, an antenna, an amplifier, a transceiver, a coupler, a low noise amplifier, a duplexer, and the like.

The memory 709 may be configured to store a software program or instructions and various data. The memory 709 may primarily include a first storage area that stores a program or instructions and a second storage area that stores data, where the first storage area may store an operating system, an application program or instructions required for at least one function (such as a sound playback function or an image display function), and the like. In addition, the memory 709 may include a volatile memory or a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), a static RAM (static RAM, SRAM), a dynamic RAM (dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synch link DRAM (Synch link DRAM, SLDRAM), or a direct rambus RAM (Direct Rambus RAM, DRRAM). In embodiments of this application, the memory 709 includes, but is not limited to, these memories and any other memory of a suitable type.

The processor 710 may include one or more processing units. Optionally, the processor 710 may integrate an application processor and a modem processor. The application processor primarily processes operations related to an operating system, a user interface, an application program, and the like. The modem processor primarily processes a wireless communication signal, and is, for example, a baseband processor. It may be understood that the foregoing modem processor may not be integrated into the processor 710.

The processor 710 is configured to boost an upper limit value of maximum output power of the terminal based on a target power adjustment value, where a lower limit value of the maximum output power of the terminal remains unchanged, or the target power adjustment value is related to a resource block RB allocation of the terminal.

Optionally, the radio frequency unit 701 is configured to report capability information of the terminal to a network-side device before the upper limit value of the maximum output power of the terminal is boosted based on the target power adjustment value, where the capability information indicates that the terminal has a power boosting capability; and the radio frequency unit 701 is further configured to receive indication information from the network-side device, where the indication information indicates the terminal to boost the maximum output power.

Optionally, the processor 710 is further configured to determine the target power adjustment value based on the RB allocation of the terminal.

Optionally, the target power adjustment value is a power adjustment value corresponding to the RB allocation of the terminal, where different types of RB allocations correspond to different power adjustment values.

Optionally, the processor 710 is specifically configured to:

boost the upper limit value of the maximum output power of the terminal based on the target power adjustment value in a case that a first condition is satisfied and the RB allocation of the terminal is an RB allocation of a particular type, where
the first condition includes at least one of the following: a modulation waveform of the terminal is a particular waveform, and a modulation manner of the terminal is a particular modulation manner.

Optionally, the RB allocation of the particular type is an RB allocation corresponding to a power adjustment value greater than 0.

Optionally, the processor 710 is further configured to:

determine whether the RB allocation of the terminal is the RB allocation of the particular type based on a lowest RB index of the RB allocation of the terminal and a resource block length of the RB allocation of the terminal, where the resource block length is a length of allocated consecutive resource blocks in units of RBs.

It may be understood that for an implementation process of each implementation mentioned in this embodiment, refer to the related descriptions in the method embodiments. Same or corresponding technical effects are achieved. To avoid repetition, details are not described herein again.

An embodiment of this application further provides a network-side device, including a processor and a communication interface. The communication interface is configured to send indication information to a terminal based on an RB allocation of the terminal, where the indication information indicates the terminal to boost maximum output power of the terminal. This network-side device embodiment corresponds to the foregoing network-side device method embodiments. Each implementation process and implementation of the foregoing method embodiment are applicable to this network-side device embodiment, and same technical effects can be achieved.

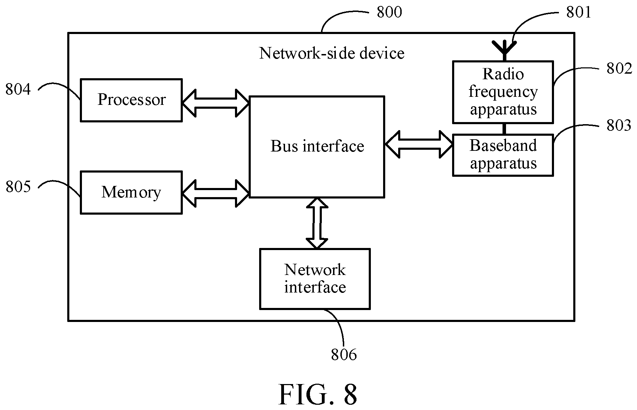

Specifically, an embodiment of this application further provides a network-side device. As shown in FIG. 8, a network-side device 800 includes: an antenna 801, a radio frequency apparatus 802, a baseband apparatus 803, a processor 804, and a memory 805. The antenna 801 is connected to the radio frequency apparatus 802. In an uplink direction, the radio frequency apparatus 802 receives information through the antenna 801, and sends the received information to the baseband apparatus 803 for processing. In a downlink direction, the baseband apparatus 803 processes to-be-sent information, and sends the processed information to the radio frequency apparatus 802, and the radio frequency apparatus 802 processes the received information, and sends the processed information through the antenna 801.

The method performed by the network-side device in the above embodiments may be implemented in the baseband apparatus 803. The baseband apparatus 803 includes a baseband processor.

The baseband apparatus 803 may include, for example, at least one baseband board, and a plurality of chips are arranged on the baseband board. As shown in FIG. 8, one chip, such as the baseband processor, is connected to the memory 805 through a bus interface, so as to invoke a program in the memory 805, and perform an operation performed by a network device shown in the above method embodiments.

The network-side device may further include a network interface 806. The interface is, for example, a common public radio interface (Common Public Radio Interface, CPRI).

Specifically, in this embodiment of this application, the network-side device 800 further includes: instructions or a program that is stored in the memory 805 and that is runnable on the processor 804. The processor 804 invokes the instructions or program in the memory 805 to perform the method performed by various modules shown in FIG. 5, and same technical effects are achieved. To avoid repetition, details are not described herein again.

An embodiment of this application further provides a readable storage medium. The readable storage medium stores a program or instructions, and the program or instructions are executed by a processor to implement each process of the foregoing output power control method embodiments, and same technical effects can be achieved. To avoid repetition, details are not described herein again.

The processor is the processor in the terminal in the foregoing embodiments. The readable storage medium includes a computer-readable storage medium, such as a computer read-only memory ROM, a random access memory RAM, a magnetic disk, or an optical disk. In some examples, the readable storage medium may be a non-transitory readable storage medium.

An embodiment of this application further provides a chip. The chip includes a processor and a communication interface. The communication interface is coupled to the processor, the processor is configured to run a program or instructions to implement each process of the foregoing output power control method embodiments, and same technical effects can be achieved. To avoid repetition, details are not described herein again.

It should be understood that the chip mentioned in this embodiment of this application may alternatively be referred to as a system level chip, a system chip, a chip system, a system on chip, or the like.

An embodiment of this application further provides a computer program/program product. The computer program/program product is stored in a storage medium, the computer program/program product is executed by at least one processor to implement each process of the foregoing output power control method embodiments, and same technical effects can be achieved. To avoid repetition, details are not described herein again.

An embodiment of this application further provides an output power control system, including: a terminal and a network-side device. The terminal is configured to perform each process in FIG. 2 and the foregoing method embodiments. The network-side device is configured to perform each process in FIG. 3 and the foregoing method embodiments, and same technical effect can be achieved. To avoid repetition, details are not described herein again.

It should be noted that herein, the term "include", "comprise", or any other variants thereof are intended to encompass in a non-exclusive mode, so that a process, method, object, or apparatus including a series of elements not only includes those elements, but also includes other elements that are not explicitly listed, or elements that are inherent to such a process, method, object, or apparatus. Without more limitations, an element defined by a sentence "including one..." does not exclude existence of other same elements in the process, method, object, or apparatus that includes the element. In addition, it should be noted that a scope of the method and the apparatus in the implementations of this application is not limited to performing functions according to a sequence that is shown or discussed, but may further include performing functions in a substantially simultaneous manner or in a reversed sequence according to the functions involved. For example, the described method may be performed in a different order than a described order, and various steps may be added, omitted, or combined. In addition, features described with reference to some examples may be combined in other examples.

Through the description of the foregoing implementations, a person skilled in the art may clearly understand that the methods according to the foregoing embodiments may be implemented by software and a necessary general hardware platform, or may be implemented by hardware. The computer software product is stored in a storage medium (such as an ROM, an RAM, a magnetic disk, or an optical disc) and includes several instructions for causing a terminal or a network-side device to perform the methods described in embodiments of this application.

Embodiments of this application are described above with reference to the accompanying drawings. However, this application is not limited to the specific implementations described above, and the specific implementations described above are only examples and not limitative. A person of ordinary skill in the art may make several implementations under the teaching of this application without departing from the spirit of this application and the scope of protection of the claims, and such implementations shall all fall within the scope of protection of this application.

## Claims

1. An output power control method, comprising:

    boosting, by a terminal, an upper limit value of maximum output power of the terminal based on a target power adjustment value, wherein

a lower limit value of the maximum output power of the terminal remains unchanged or is boosted based on the target power adjustment value, or the target power adjustment value is related to a resource block RB allocation of the terminal.

2. The method according to claim 1, wherein before the boosting, by the terminal, the upper limit value of the maximum output power of the terminal based on the target power adjustment value, the method further comprises:

reporting, by the terminal, capability information of the terminal to a network-side device, wherein the capability information indicates that the terminal has a power boosting capability; and
receiving, by the terminal, indication information from the network-side device, wherein the indication information indicates the terminal to boost the maximum output power of the terminal.

3. The method according to claim 1 or 2, further comprising:
determining, by the terminal, the target power adjustment value based on the RB allocation of the terminal.

4. The method according to any one of claims 1 to 3, wherein the target power adjustment value is a power adjustment value corresponding to the RB allocation of the terminal, and different types of RB allocations correspond to different power adjustment values.

5. The method according to any one of claims 1 to 4, wherein the boosting, by the terminal, the upper limit value of the maximum output power of the terminal based on the target power adjustment value comprises:

boosting, by the terminal in a case that a first condition is satisfied and the RB allocation of the terminal is an RB allocation of a particular type, the upper limit value of the maximum output power of the terminal based on the target power adjustment value, wherein
the first condition comprises at least one of the following: a modulation waveform of the terminal is a particular waveform, and a modulation manner of the terminal is a particular modulation manner.

6. The method according to claim 5, wherein the RB allocation of the particular type is an RB allocation corresponding to a power adjustment value greater than 0.

7. The method according to claim 5 or 6, further comprising:

determining, by the terminal, whether the RB allocation of the terminal is the RB allocation of the particular type based on a lowest RB index of the RB allocation of the terminal and a resource block length of the RB allocation of the terminal, wherein
the resource block length is a length of allocated consecutive resource blocks in units of RBs.

8. The method according to any one of claims 5 to 7, wherein in a case that the RB allocation of the terminal satisfies a second condition, the RB allocation of the terminal is an RB allocation of a first type, wherein

the RB allocation of the particular type comprises the RB allocation of the first type;
the second condition comprises: $L_{CRB} \leq a1$ and $b1 \leq RB_{start} \leq c1$; and $a1 \leq N_{RB}$ and $0 \leq b1 \leq c1 \leq N_{RB}\text{-}L_{CRB}$; and
$L_{CRB}$ denotes the resource block length, $RB_{start}$ denotes the lowest RB index, and $N_{RB}$ denotes a maximum quantity of RBs in a transmission channel bandwidth configuration and a sub-carrier spacing configuration that are adopted by the terminal.

9. The method according to claim 8, wherein a power adjustment value corresponding to the RB allocation of the first type is a first power adjustment value, and the first power adjustment value is greater than 0, wherein
in a case that the RB allocation of the terminal is the RB allocation of the first type, the target power adjustment value is the first power adjustment value.

10. The method according to claim 7, wherein in a case that the RB allocation of the terminal satisfies a third condition, the RB allocation of the terminal is an RB allocation of a second type; and

in a case that the RB allocation of the terminal satisfies a fourth condition, the RB allocation of the terminal is an RB allocation of a third type, wherein

the RB allocation of the particular type comprises the RB allocation of the second type and the RB allocation of the third type;

the third condition comprises: $a2 \leq L_{CRB} \leq b2$ and $c2 \leq RB_{start} \leq d2$; and $a2 \leq b2 \leq N_{RB}$ and $0 \leq c2 \leq d2 \leq N_{RB}\text{-}L_{CRB}$;

the fourth condition comprises: $a3 \leq L_{CRB} \leq b3$ and $c3 \leq RB_{start} \leq d3$; and $a3 \leq b3 \leq N_{RB}$, and $0 \leq c3 \leq d3 \leq N_{RB}\text{-}L_{CRB}$; and

$L_{CRB}$ denotes the resource block length, $RB_{start}$ denotes the lowest RB index, and $N_{RB}$ denotes a maximum quantity of RBs in a transmission channel bandwidth configuration and a sub-carrier spacing configuration that are adopted by the terminal.

11. The method according to claim 10, wherein a power adjustment value corresponding to the RB allocation of the second type is a second power adjustment value, and a power adjustment value corresponding to the RB allocation of the third type is a third power adjustment value, wherein

the second power adjustment value and the third power adjustment value are both greater than 0, in a case that the RB allocation of the terminal is the RB allocation of the second type, the target power adjustment value is the second power adjustment value, and in a case that the RB allocation of the terminal is the RB allocation of the third type, the target power adjustment value is the third power adjustment value.

12. The method according to any one of claims 5 to 7, wherein in a case that the RB allocation of the terminal satisfies a fifth condition, the RB allocation of the terminal is an inner RB allocation; or

in a case that the RB allocation of the terminal satisfies a sixth condition, the RB allocation of the terminal is an edge RB allocation; or

in a case that the RB allocation of the terminal satisfies neither the fifth condition nor the sixth condition, or in a case that the RB allocation of the terminal is neither the inner RB allocation nor the edge RB allocation, the RB allocation is an outer RB allocation, wherein

the fifth condition comprises: $L_{CRB} \leq ceil\,(N_{RB}/2)$ and $RB_{start,\,low} \leq RB_{start} \leq RB_{start,\,high}$;

the sixth condition comprises: $L_{CRB} \leq 2$, and an RB position allocated by the RB allocation is at an uppermost end or a lowermost end of a channel; wherein

$$RB_{start,\,low}=\max(1,\, floor\,(L_{CRB}/2)),\ and\ RB_{start,\,high}=N_{RB}\text{-}RB_{Start,\,Low}\text{-}L_{CRB};$$

and

$L_{CRB}$ denotes the resource block length, $RB_{start}$ denotes the lowest RB index, $N_{RB}$ denotes a maximum quantity of RBs in a transmission channel bandwidth configuration and a sub-carrier spacing configuration that are adopted by the terminal, max denotes a function for finding a maximum value, floor denotes a rounding-down function, and ceil denotes a rounding-up function.

13. The method according to claim 12, wherein the RB allocation of the particular type comprises the inner RB allocation, wherein

a power adjustment value corresponding to the inner RB allocation is a fourth power adjustment value, and the fourth power adjustment value is greater than 0; and in a case that the RB allocation of the terminal is the inner RB allocation, the target power adjustment value is the fourth power adjustment value.

14. The method according to claim 12, wherein in a case that the RB allocation of the terminal is the inner RB allocation, if the RB allocation of the terminal satisfies a seventh condition, the RB allocation of the terminal is an RB allocation of a fourth type, wherein the RB allocation of the particular type comprises the RB allocation of the fourth type, and the seventh condition comprises: $a4 \leq L_{CRB} \leq b4$ and $c4 \leq RB_{start} \leq d4$; and $a4 \leq b4 \leq ceil(N_{RB}/2)$ and $RB_{start,\,low} \leq c4 \leq d4 \leq RB_{start,\,high}$;

or

in a case that the RB allocation of the terminal is the edge RB allocation or the outer RB allocation, if the RB allocation of the terminal satisfies an eighth condition, the RB allocation of the terminal is an RB allocation of a fifth type, wherein the RB allocation of the particular type comprises the RB allocation of the fifth type, and the eighth condition comprises: $e1 \leq L_{CRB} \leq f1$ and $g1 \leq RB_{start} \leq h1$; and $ceil(N_{RB}/2) < e1 \leq f1$ and $0 \leq g1 \leq h1 \leq N_{RB}\text{-}L_{CRB}$, or $e1 \leq f1 \leq ceil(N_{RB}/2)$ and $RB_{start,\,high} < g1 \leq h1$, or $e1 \leq f1 \leq ceil(N_{RB}/2)$ and $g1 \leq h1 < RB_{start,\,low}$.

15. The method according to claim 14, wherein a power adjustment value corresponding to the RB allocation of the fourth type is a fifth power adjustment value, or a power adjustment value corresponding to the RB allocation of the fifth type is a sixth power adjustment value, wherein
the fifth power adjustment value and the sixth power adjustment value are both greater than 0, in a case that the RB allocation of the terminal is the RB allocation of the fourth type, the target power adjustment value is the fifth power adjustment value, and in a case that the RB allocation of the terminal is the RB allocation of the fifth type, the target power adjustment value is the sixth power adjustment value.

16. The method according to claim 12, wherein in a case that the RB allocation of the terminal is the inner RB allocation, if the RB allocation of the terminal satisfies a ninth condition, the RB allocation of the terminal is an RB allocation of a sixth type; and if the RB allocation of the terminal satisfies a tenth condition, the RB allocation is an RB allocation of a seventh type, wherein

the RB allocation of the particular type comprises the RB allocation of the sixth type and the RB allocation of the seventh type;
the ninth condition comprises: $a5 \leq L_{CRB} \leq b5$ and $c5 \leq RB_{start} \leq d5$; and $a5 \leq b5 \leq ceil(N_{RB}/2)$ and $RB_{start, low} \leq c5 \leq d5 \leq RB_{start, high}$; and
the tenth condition comprises: $a6 \leq L_{CRB} \leq b6$ and $c6 \leq RB_{start} \leq d6$; and $a6 \leq b6 \leq ceil(N_{RB}/2)$ and $RB_{start, low} \leq c6 \leq d6 \leq RB_{start, high}$.

17. The method according to claim 16, wherein a power adjustment value corresponding to the RB allocation of the sixth type is a seventh power adjustment value, and a power adjustment value corresponding to the RB allocation of the seventh type is an eighth power adjustment value, wherein
the seventh power adjustment value and the eighth power adjustment value are both greater than 0, in a case that the RB allocation of the terminal is the RB allocation of the sixth type, the target power adjustment value is the seventh power adjustment value, and in a case that the RB allocation of the terminal is the RB allocation of the seventh type, the target power adjustment value is the eighth power adjustment value.

18. The method according to claim 12, wherein in a case that the RB allocation of the terminal is the edge RB allocation or the outer RB allocation, if the RB allocation of the terminal satisfies an eleventh condition, the RB allocation of the terminal is an RB allocation of an eighth type; and if the RB allocation of the terminal satisfies a twelfth condition, the RB allocation of the terminal is an RB allocation of a ninth type, wherein

the RB allocation of the particular type comprises the RB allocation of the eighth type and the RB allocation of the ninth type;
the eleventh condition comprises: $e2 \leq L_{CRB} \leq f2$ and $g2 \leq RB_{start} \leq h2$; and $ceil(N_{RB}/2) < e2 \leq f2$ and $0 \leq g2 \leq h2 \leq N_{RB}-L_{CRB}$, or $e2 \leq f2 \leq ceil(N_{RB}/2)$ and $RB_{start, high} < g2 \leq h2$, or $e2 \leq f2 \leq ceil(N_{RB}/2)$ and $g2 \leq h2 < RB_{start, low}$; and
the twelfth condition comprises: $e3 \leq L_{CRB} \leq f3$ and $g3 \leq RB_{start} \leq h3$; and $ceil(N_{RB}/2) < e3 \leq f3 \leq N_{RB}-L_{CRB}$, or $e3 \leq f3 \leq ceil(N_{RB}/2)$ and $RB_{start, high} < g3 \leq h3$, or $e3 \leq f3 \leq ceil(N_{RB}/2)$ and $g3 \leq h3 \leq RB_{start, low}$.

19. The method according to claim 18, wherein a power adjustment value corresponding to the RB allocation of the eighth type is a ninth power adjustment value, and a power adjustment value corresponding to the RB allocation of the ninth type is a tenth power adjustment value, wherein
the ninth power adjustment value and the tenth power adjustment value are both greater than 0, in a case that the RB allocation of the terminal is the RB allocation of the eighth type, the target power adjustment value is the ninth power adjustment value, and in a case that the RB allocation of the terminal is the RB allocation of the ninth type, the target power adjustment value is the tenth power adjustment value.

20. The method according to any one of claims 1 to 19, wherein an upper limit value of the boosted maximum output power of the terminal is at least one of the following:

$$MIN\{P_{EMAX, c}, P_{PowerClass}-\Delta P_{PowerClass}+\Delta P_{PowerBoost}\};$$

and

$$MIN\{P_{EMAX, c}+\Delta P_{PowerBoost}, P_{PowerClass}-\Delta P_{PowerClass}+\Delta P_{PowerBoost}\},$$

wherein

$P_{EMAX, c}$ denotes the maximum output power value of the terminal that is configured by the network-side device, $P_{PowerClass}$ denotes the maximum output power of the terminal at a first power class that is specified in a protocol, $\Delta P_{PowerClass}$ denotes an adjustment value of the maximum output power of the terminal at the first power class, $\Delta P_{PowerBoost}$ denotes the target power adjustment value, the first power class is a power class adopted by the terminal, and MIN denotes a function for finding a minimum value.

21. The method according to any one of claims 5 to 20, wherein the particular waveform comprises one of the following: discrete Fourier transform-spread-orthogonal frequency division multiplexing DFT-s-OFDM and cyclic prefix-orthogonal frequency division multiplexing CP-OFDM; or
the particular modulation manner comprises one of the following: quadrature phase-shift keying QPSK and quadrature amplitude modulation QAM.

22. An output power control method, comprising:
sending, by a network-side device, indication information to a terminal based on a resource block RB allocation of the terminal, wherein the indication information indicates the terminal to boost maximum output power of the terminal.

23. The method according to claim 22, further comprising:
receiving, by the network-side device, capability information reported by the terminal, wherein the capability information indicates that the terminal has a power boosting capability.

24. The method according to claim 22 or 23, wherein the sending, by the network-side device, the indication information to the terminal based on the resource block RB allocation of the terminal comprises:

sending, by the network-side device, the indication information to the terminal in a case that it is determined that the terminal satisfies a first condition and the RB allocation of the terminal is an RB allocation of a particular type, wherein
the first condition comprises at least one of the following: a modulation waveform of the terminal is a particular waveform, and a modulation manner of the terminal is a particular modulation manner.

25. The method according to claim 24, wherein the RB allocation of the particular type is an RB allocation corresponding to a power adjustment value greater than 0.

26. The method according to claim 24 or 25, further comprising:

determining, by the network-side device, whether the RB allocation of the terminal is the RB allocation of the particular type based on a lowest RB index of the RB allocation of the terminal and a resource block length of the RB allocation of the terminal, wherein
the resource block length is a length of allocated consecutive resource blocks in units of RBs.

27. The method according to claim 26, wherein in a case that the RB allocation of the terminal satisfies a second condition, the RB allocation of the terminal is an RB allocation of a first type, wherein

the RB allocation of the particular type comprises the RB allocation of the first type;
the second condition comprises: $L_{CRB} \le a1$ and $b1 \le RB_{start} \le c1$; and $a1 \le N_{RB}$ and $0 \le b1 \le c1 \le N_{RB}\text{-}L_{CRB}$; and
$L_{CRB}$ denotes the resource block length, $RB_{start}$ denotes the lowest RB index, and $N_{RB}$ denotes a maximum quantity of RBs in a transmission channel bandwidth configuration and a sub-carrier spacing configuration that are adopted by the terminal.

28. The method according to claim 27, wherein a power adjustment value corresponding to the RB allocation of the first type is a first power adjustment value, and the first power adjustment value is greater than 0.

29. The method according to claim 26, wherein in a case that the RB allocation of the terminal satisfies a third condition, the RB allocation of the terminal is an RB allocation of a second type; and

in a case that the RB allocation of the terminal satisfies a fourth condition, the RB allocation of the terminal is an RB allocation of a third type, wherein
the RB allocation of the particular type comprises the RB allocation of the second type and the RB allocation of the third type;

the third condition comprises: $a2 \leq L_{CRB} \leq b2$ and $c2 \leq RB_{start} \leq d2$; and $a2 \leq b2 \leq N_{RB}$ and $0 \leq c2 \leq d2 \leq N_{RB}-L_{CRB}$; the fourth condition comprises: $a3 \leq L_{CRB} \leq b3$ and $c3 \leq RB_{start} \leq d3$; and $a3 \leq b3 \leq N_{RB}$, and $0 \leq c3 \leq d3 \leq N_{RB}-L_{CRB}$; and

$L_{CRB}$ denotes the resource block length, $RB_{start}$ denotes the lowest RB index, and $N_{RB}$ denotes a maximum quantity of RBs in a transmission channel bandwidth configuration and a sub-carrier spacing configuration that are adopted by the terminal.

30. The method according to claim 29, wherein a power adjustment value corresponding to the RB allocation of the second type is a second power adjustment value, and a power adjustment value corresponding to the RB allocation of the third type is a third power adjustment value, wherein
the second power adjustment value and the third power adjustment value are both greater than 0.

31. The method according to claim 26, wherein in a case that the RB allocation of the terminal satisfies a fifth condition, the RB allocation of the terminal is an inner RB allocation; or

in a case that the RB allocation of the terminal satisfies a sixth condition, the RB allocation of the terminal is an edge RB allocation; or
in a case that the RB allocation of the terminal satisfies neither the fifth condition nor the sixth condition, or in a case that the RB allocation of the terminal is neither the inner RB allocation nor the edge RB allocation, the RB allocation is an outer RB allocation, wherein
the fifth condition comprises: $L_{CRB} \leq ceil(N_{RB}/2)$ and $RB_{start, low} \leq RB_{start} \leq RB_{start, high}$;
the sixth condition comprises: $L_{CRB} \leq 2$, and an RB position allocated by the RB allocation is at an uppermost end or a lowermost end of a channel;

$$RB_{start, low}=max(1, floor(L_{CRB}/2)), RB_{start, high}=N_{RB}-RB_{Start, Low}-L_{CRB};$$

and
$L_{CRB}$ denotes the resource block length, $RB_{start}$ denotes the lowest RB index, $N_{RB}$ denotes a maximum quantity of RBs in a transmission channel bandwidth configuration and a sub-carrier spacing configuration that are adopted by the terminal, max denotes a function for finding a maximum value, floor denotes a rounding-down function, and ceil denotes a rounding-up function.

32. The method according to claim 31, wherein the RB allocation of the particular type comprises the inner RB allocation, wherein
a power adjustment value corresponding to the inner RB allocation is a fourth power adjustment value, and the fourth power adjustment value is greater than 0.

33. The method according to claim 31, wherein in a case that the RB allocation of the terminal is the inner RB allocation, if the RB allocation of the terminal satisfies a seventh condition, the RB allocation of the terminal is an RB allocation of a fourth type, wherein the RB allocation of the particular type comprises the RB allocation of the fourth type, and the seventh condition comprises: $a4 \leq L_{CRB} \leq b4$ and $c4 \leq RB_{start} \leq d4$; and $a4 \leq b4 \leq ceil(N_{RB}/2)$ and $RB_{start, low} \leq c4 \leq d4 \leq RB_{start, high}$;
or
in a case that the RB allocation of the terminal is the edge RB allocation or the outer RB allocation, if the RB allocation of the terminal satisfies an eighth condition, the RB allocation of the terminal is an RB allocation of a fifth type, wherein the RB allocation of the particular type comprises the RB allocation of the fifth type, and the eighth condition comprises: $e1 \leq L_{CRB} \leq f1$ and $g1 \leq RB_{start} \leq h1$; and $ceil(N_{RB}/2) < e1 \leq f1$ and $0 \leq g1 \leq h1 \leq N_{RB}-L_{CRB}$, or $e1 \leq f1 \leq ceil(N_{RB}/2)$ and $RB_{start, high} < g1 \leq h1$, or $e1 \leq f1 \leq ceil(N_{RB}/2)$ and $g1 \leq h1 < RB_{start, low}$.

34. The method according to claim 33, wherein a power adjustment value corresponding to the RB allocation of the fourth type is a fifth power adjustment value, or a power adjustment value corresponding to the RB allocation of the fifth type is a sixth power adjustment value, wherein
the fifth power adjustment value and the sixth power adjustment value are both greater than 0.

35. The method according to claim 31, wherein in a case that the RB allocation of the terminal is the inner RB allocation, if the RB allocation of the terminal satisfies a ninth condition, the RB allocation of the terminal is an RB allocation of a sixth type; and if the RB allocation of the terminal satisfies a tenth condition, the RB allocation is an RB allocation of a seventh type, wherein

the RB allocation of the particular type comprises the RB allocation of the sixth type and the RB allocation of the seventh type;

the ninth condition comprises: $a5 \leq L_{CRB} \leq b5$ and $c5 \leq RB_{start} \leq d5$; and $a5 \leq b5 \leq ceil(N_{RB}/2)$ and $RB_{start, low} \leq c5 \leq d5 \leq RB_{start, high}$; and

the tenth condition comprises: $a6 \leq L_{CRB} \leq b6$ and $c6 \leq RB_{start} \leq d6$; and $a6 \leq b6 \leq ceil(N_{RB}/2)$ and $RB_{start, low} \leq c6 \leq d6 \leq RB_{start, high}$.

36. The method according to claim 35, wherein a power adjustment value corresponding to the RB allocation of the sixth type is a seventh power adjustment value, and a power adjustment value corresponding to the RB allocation of the seventh type is an eighth power adjustment value, wherein

the seventh power adjustment value and the eighth power adjustment value are both greater than 0.

37. The method according to claim 31, wherein in a case that the RB allocation of the terminal is the edge RB allocation or the outer RB allocation, if the RB allocation of the terminal satisfies an eleventh condition, the RB allocation of the terminal is an RB allocation of an eighth type; and if the RB allocation of the terminal satisfies a twelfth condition, the RB allocation of the terminal is an RB allocation of a ninth type, wherein

the RB allocation of the particular type comprises the RB allocation of the eighth type and the RB allocation of the ninth type;

the eleventh condition comprises: $e2 \leq L_{CRB} \leq f2$ and $g2 \leq RB_{start} \leq h2$; and $ceil(N_{RB}/2) < e2 \leq f2$ and $0 \leq g2 \leq h2 \leq N_{RB}-L_{CRB}$, or $e2 \leq f2 \leq ceil(N_{RB}/2)$ and $RB_{start, high} < g2 \leq h2$, or $e2 \leq f2 \leq ceil(N_{RB}/2)$ and $g2 \leq h2 < RB_{start, low}$; and

the twelfth condition comprises: $e3 \leq L_{CRB} \leq f3$ and $g3 \leq RB_{start} \leq h3$; and $ceil(N_{RB}/2) < e3 \leq f3$ and $0 \leq g3 \leq h3 \leq N_{RB}-L_{CRB}$, or $e3 \leq f3 \leq ceil(N_{RB}/2)$ and $RB_{start, high} < g3 \leq h3$, or $e3 \leq f3 \leq ceil(N_{RB}/2)$ and $g3 \leq h3 < RB_{start, low}$.

38. The method according to claim 37, wherein a power adjustment value corresponding to the RB allocation of the eighth type is a ninth power adjustment value, and a power adjustment value corresponding to the RB allocation of the ninth type is a tenth power adjustment value, wherein

the ninth power adjustment value and the tenth power adjustment value are both greater than 0.

39. The method according to any one of claims 24 to 38, wherein the particular waveform comprises one of the following: discrete Fourier transform-spread-orthogonal frequency division multiplexing DFT-s-OFDM and cyclic prefix-orthogonal frequency division multiplexing CP-OFDM; or

the particular modulation manner comprises one of the following: quadrature phase-shift keying QPSK and quadrature amplitude modulation QAM.

40. An output power control apparatus, comprising:

a boosting module, configured to boost an upper limit value of maximum output power of a terminal based on a target power adjustment value, wherein

a lower limit value of the maximum output power of the terminal remains unchanged, or the target power adjustment value is related to a resource block RB allocation of the terminal.

41. An output power control apparatus, comprising:
a sending module, configured to send indication information to a terminal based on a resource block RB allocation of the terminal, wherein the indication information indicates the terminal to boost maximum output power of the terminal.

42. A terminal, comprising a processor and a memory, wherein the memory stores a program or instructions runnable on the processor, and the program or instructions are executed by the processor to implement the steps of the output power control method according to any one of claims 1 to 21.

43. A network-side device, comprising a processor and a memory, wherein the memory stores a program or instructions runnable on the processor, and the program or instructions are executed by the processor to implement the steps of the output power control method according to any one of claims 22 to 39.

44. A readable storage medium, wherein the readable storage medium stores a program or instructions, and the program or instructions are executed by a processor to implement the steps of the output power control method according to any one of claims 1 to 21 or implement the steps of the output power control method according to any one of claims 22 to 39.

Network-side
device

11

Terminal

11

Terminal

FIG. 1

A terminal boosts an upper limit value of maximum output power of the terminal based on a target power adjustment value, where a lower limit value of the maximum output power of the terminal remains unchanged, or the target power adjustment value is related to an RB allocation of the terminal

201

FIG. 2

A network-side device sends first indication information to a terminal based on an RB allocation of the terminal, where the first indication information indicates the terminal to boost maximum output power of the terminal

301

FIG. 3

400

Output power
control apparatus

Boosting module

401

FIG. 4

500

```
┌─────────────────────────────┐
│   Output power              │
│   control apparatus         │
│        ┌──────────────────┐ │    501
│        │ Sending module   │ │
│        └──────────────────┘ │
└─────────────────────────────┘
```

# FIG. 5

600

```
┌──────────────────────────────────────────────┐
│            Communication device                │
│                                                │
│  601   ┌────────────┐      ┌──────────┐   602  │
│        │ Processor  │◄════►│ Memory   │        │
│        └────────────┘      └──────────┘        │
└──────────────────────────────────────────────┘
```

# FIG. 6

700

```
┌──────────────────────────────────────────────────────────────────┐
│                                                                    │
│  701   ┌──────────────────┐          ┌──────────────────┐   702    │
│        │ Radio frequency  │          │ Network module   │          │
│        │     unit         │          └──────────────────┘          │
│        └──────────────────┘   710                                  │
│        ┌──────────────────┐  ┌────────────┐                        │
│        │     Memory       │  │            │  ┌──────────────────┐   │
│  709   │ ┌──────────────┐ │  │            │  │ Audio output unit│ 703│
│        │ │Application   │ │  │            │  └──────────────────┘   │
│        │ │  program     │ │  │            │                    704  │
│        │ └──────────────┘ │  │            │  ┌──────────────────┐   │
│        │ ┌──────────────┐ │  │            │  │   Input unit     │   │
│        │ │Operating     │ │  │            │  │ ┌──────────────┐ │7041│
│        │ │  system      │ │  │ Processor  │  │ │  Graphics    │ │   │
│        │ └──────────────┘ │  │            │  │ │processing unit│ │   │
│  708   ┌──────────────────┐  │            │  │ └──────────────┘ │7042│
│        │  Interface unit  │  │            │  │ ┌──────────────┐ │   │
│        └──────────────────┘  │            │  │ │ Microphone   │ │   │
│    707                       │            │  │ └──────────────┘ │   │
│        ┌──────────────────┐  │            │  └──────────────────┘706│
│        │  User input unit │  │            │  ┌──────────────────┐   │
│ 7071   │ ┌──────────────┐ │  │            │  │  Display unit    │   │
│        │ │ Touch panel  │ │  │            │  │ ┌──────────────┐ │7061│
│        │ └──────────────┘ │  │            │  │ │Display panel │ │   │
│ 7072   │ ┌──────────────┐ │  │            │  │ └──────────────┘ │   │
│        │ │Another input │ │  │            │  └──────────────────┘   │
│        │ │   device     │ │  └────────────┘                        │
│        │ └──────────────┘ │                                        │
│        └──────────────────┘  ┌────────────┐                        │
│                              │  Sensor    │  705                    │
│                              └────────────┘                        │
└──────────────────────────────────────────────────────────────────┘
```

# FIG. 7

FIG. 8

## INTERNATIONAL SEARCH REPORT

| International application No. |
|---|
| **PCT/CN2024/110546** |

### A. CLASSIFICATION OF SUBJECT MATTER

H04W 52/36(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, WOTXT, EPTXT, USTXT: 不变, 不动, 不改变, 调整, 功率, 固定, 上限, 数据块, 锁定, 抬高, 提高, 提升, 下限, 增加, 资源单元, 资源块, 最大, 最大输出功率, 最小, allocat+, boost+, fixed, keep, locked, lower, MPR, power, powerboost+, RB, RE, unchange, not, change, CMAX_L

### C. DOCUMENTS CONSIDERED TO BE RELEVANT

| Category* | Citation of document, with indication, where appropriate, of the relevant passages | Relevant to claim No. |
|---|---|---|
| X | US 2023199743 A1 (APPLE INC.) 22 June 2023 (2023-06-22) description, paragraphs [0031]-[0039], [0049]-[0058], [0076]-[0078], and [0090] | 1-44 |
| A | CN 115915369 A (DATANG MOBILE COMMUNICATIONS EQUIPMENT CO., LTD.) 04 April 2023 (2023-04-04) entire document | 1-44 |
| A | US 2010255868 A1 (LG ELECTRONICS, INC.) 07 October 2010 (2010-10-07) entire document | 1-44 |
| A | US 2020314764 A1 (SAMSUNG ELECTRONICS CO., LTD.) 01 October 2020 (2020-10-01) entire document | 1-44 |
| A | WO 2021162497 A1 (LG ELECTRONICS, INC.) 19 August 2021 (2021-08-19) entire document | 1-44 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 October 2024** | **23 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT<br>Information on patent family members | | | International application No.<br>**PCT/CN2024/110546** |
|---|---|---|---|

| Patent document<br>cited in search report | Publication date<br>(day/month/year) | Patent family member(s) | Publication date<br>(day/month/year) |
|---|---|---|---|
| US    2023199743    A1 | 22 June 2023 | CN    116321391    A<br>EP    4203566    A1 | 23 June 2023<br>28 June 2023 |
| CN    115915369    A | 04 April 2023 | None | |
| US    2010255868    A1 | 07 October 2010 | None | |
| US    2020314764    A1 | 01 October 2020 | EP    4132126    A1<br>KR    20200114758    A<br>US    2023086214    A1<br>EP    3928563    A1<br>WO    2020204524    A1 | 08 February 2023<br>07 October 2020<br>23 March 2023<br>29 December 2021<br>08 October 2020 |
| WO    2021162497    A1 | 19 August 2021 | US    2023085404    A1<br>KR    20220142478    A | 16 March 2023<br>21 October 2022 |

Form PCT/ISA/210 (patent family annex) (July 2022)

**EP 4 761 388 A1**

**Patent documents cited in the description**

- CN 202311009637